Europäisches Patentamt

European Patent Office

Office européen des brevets

(19)

(11) EP 0 831 347 A2

## (12) EUROPÄISCHE PATENTANMELDUNG

(43) Veröffentlichungstag:
25.03.1998 Patentblatt 1998/13

(51) Int. Cl.$^6$: G02B 6/38, G02B 6/255

(21) Anmeldenummer: 97113760.9

(22) Anmeldetag: 08.08.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 18.09.1996 DE 19638092

(71) Anmelder:
SIEMENS AKTIENGESELLSCHAFT
80333 München (DE)

(72) Erfinder:
Kossat, Rainer, Dipl.-Ing. (FH)
83229 Aschau (DE)

(54) **Verfahren sowie Vorrichtung zur Wärmebehandlung mindestens einer Lichtleitfaser**

(57) Zur Wärmebehandlung wird auf die jeweilige Lichtleitfaser (FE1) mindestens ein Hitzeimpuls derart abgegeben wird, daß die Lichtleitfaser (FE1) lediglich im Oberflächenbereich (OZ) ihres Glasmantels (MA1) und/oder an ihrer Stirnfläche angeschmolzen wird.

FIG 1

EP 0 831 347 A2

**Beschreibung**

Die Erfindung betrifft ein Verfahren zur Wärmebehandlung mindestens einer Lichtleitfaser.

Aufgrund der geringen Querschnittsabmessungen von Lichtleitfasern kann deren Wärmebehandlung in der Praxis kritisch sein. So kann es beispielsweise beim konventionellen Verschweißen zweier Lichtleitfaserenden zu einer unzulässig hohen Verformung bzw. Verschiebung deren Faserkerne kommen, woraus eine unerwünscht hohe Spleißdämpfung resultieren kann. Ein Schweißverfahren, das den Schweißvorgang aufgrund solcher Spleißdämpfungsursachen vorzeitig abbricht, ist zum Beispiel aus der US 5,384,870 bekannt.

Der Erfindung liegt die Aufgabe zugrunde, einen Weg aufzuzeigen, wie mindestens eine Lichtleitfaser verbessert wärmebehandelt werden kann. Gemäß der Erfindung wird diese Aufgabe bei einem Verfahren der eingangs genannten Art dadurch gelöst, daß auf die jeweilige Lichtleitfaser mindestens ein Hitzeimpuls derart abgegeben wird, daß die Lichtleitfaser lediglich im Oberflächenbereich ihres Glasmantels und/oder an ihrer Stirnfläche angeschmolzen wird.

Dadurch ist es ermöglicht, die jeweilige Lichtleitfaser unter einer Vielzahl praktischer Gegebenheiten gezielter, d.h. in präzise kontrollierbarer Weise wärmezubehandeln.

Die Erfindung betrifft weiterhin eine Vorrichtung zur Wärmebehandlung mindestens einer Lichtleitfaser unter Verwendung einer Wärmequelle, welche dadurch gekennzeichnet ist, daß die Wärmequelle derart ausgebildet ist, daß mit Hilfe mindestens eines Hitzeimpulses lediglich der Glasmantel und/oder die Stirnfläche der jeweiligen Lichtleitfaser anschmelzbar sind/ist.

Sonstige Weiterbildungen der Erfindung sind in den Unteransprüchen wiedergegeben.

Die Erfindung und ihre Weiterbildungen werden nachfolgend anhand von Zeichnungen näher erläutert. Es zeigen:

Figur 1            schematisch in teilweise perspektivischer Darstellung den Grundaufbau einer Einrichtung zur Duchführung des erfindungsgemäßen Verfahrens,

Figuren 2 mit 8   jeweils in schematischer sowie vergrößerter Darstellung Einzelheiten des Wärmebehandlungsverfahrens nach Figur 1,

Figur 9            in schematischer Darstellung Entladungsstromstärke und Impulsdauer eines Glimmentladungsimpulses bei der Durchführung des erfindungsgemäßen Verfahrens nach den Figuren 1 mit 8,

Figur 10           der Mindesttemperaturabfall innerhalb eines Faserquerschnitts nach Abgabe zum Beispiel des Glimmentladungsimpulses nach Figur 9,

Figur 11           in schematischer Darstellung eine gewünschte Temperaturverteilung innerhalb des Faserquerschnitts einer erfindungsgemäß wärmebehandelten Lichtleitfaser,

Figur 12           in schematischer Darstellung eine modifizierte Wärmequellenanordnung bei der Vorrichtung nach Figur 1,

Figur 13           schematisch in teilweise pespektivischer Darstellung die Glättung der Außenoberfläche einer Lichtleitfaser nach dem erfindungsgemäßen Wärmebehandlungsverfahren,

Figur 14           in schematischer sowie vergrößerter Querschnittsdarstellung die Lichtleitfaser nach Figur 13 vor Durchführung des erfindungsgemäßen Wärmebehandlungsverfahrens,

Figur 15           in schematischer sowie vergrößerter Querschnittsdarstellung die Lichtleitfaser nach Figur 14 nach Durchführung des erfindungsgemäßen Wärmebehandlungsverfahrens,

Figuren 16, 17     die Herstellung einer Schweißverbindung nach einer konventionellen Schweißmethode zwischen zwei Lichtleitfasern, deren Stirnflächen unter einem Winkel zueinander stehen, und

Figuren 18, 19     die Herstellung einer Schweißverbindung nach einer konventionellen Schweißmethode zwischen zwei Lichtleitfasern, deren exzentrische Faserkerne fluchtend aufeinander ausgerichtet sind,

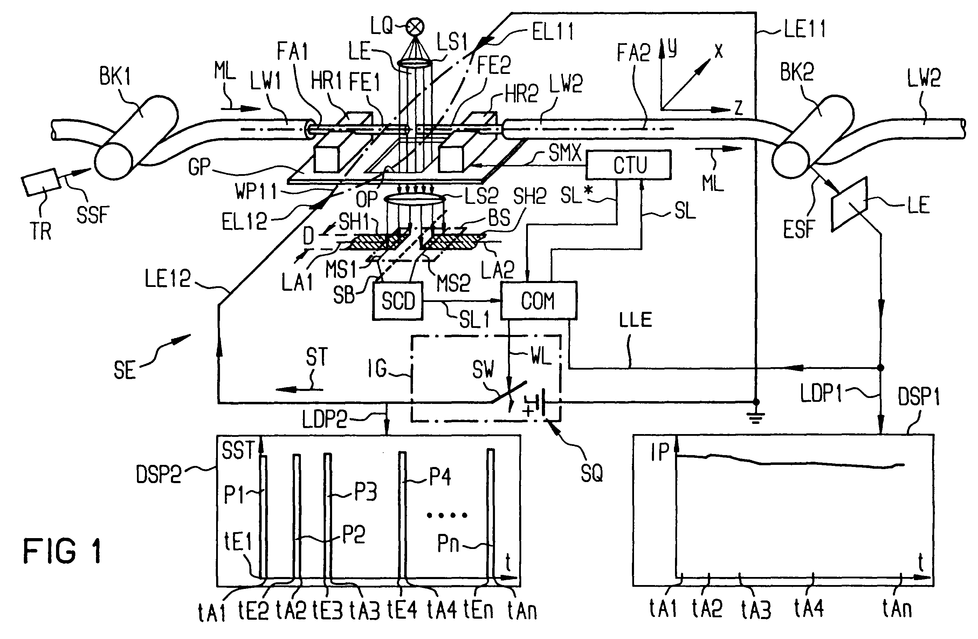

Elemente mit gleicher Funktion und Wirkungsweise sind in den Figuren 1 mit 19 jeweils mit den gleichen Bezugszeichen versehen.

Figur 1 zeigt schematisch in teilweise perspektivischer Darstellung den Grundaufbau einer Schweißeinrichtung SE, mit deren Hilfe zwei Lichtwellenleiter LW1, LW2 nach dem erfindungsgemäßen Verfahren wärmebehandelt und miteinander verschweißt werden können. Die Schweißeinrichtung SE kann dabei in vorteilhafter Weise Bestandteil eines Lichtwellenleiters-Spleißgerätes sein.

Bevor die beiden Lichtwellenleiter LW1, LW2 miteinander verschweißt werden, wird zweckmäßigerweise ihre Kunststoff-Beschichtung (= primäres und/oder sekundäres Coating) im Bereich ihrer Enden entlang einer vorgebbaren Endlänge entfernt, so daß dort ihre Lichtleitfasern, FE1, FE2 blank freiliegen. Zweckmäßigerweise wird das stirnseitige Ende der jeweiligen Lichtleitfaser FE1 bzw. FE2 derart vorpräpariert, daß jede Lichtleitfaser FE1 bzw. FE2 eine möglichst planflächige Stirnfläche aufweist, die im wesentlichen senkrecht, das heißt im 90°-Winkel zu ihrer Zentralachse FA1 bzw. FA2 liegt. Dazu kann es gegebenenfalls zweckmäßig sein, eine endseitige, vorgebbare Teillänge der jeweilig freigelegten Lichtleitfaser FE1 bzw. FE2 mit Hilfe einer konventionellen, mechanischen Trennmethode, insbesondere mit der sogenannten Kerb-Zieh-Brechmethode, abzutrennen bzw. abzuschneiden.

Zusätzlich oder unabhängig von dieser mechanischen Präparationsmaßnahme kann es besonders zweckmäßig sein, die jeweilig freigelegte Lichtleitfaser FE1 bzw. FE2 im Bereich ihrer Stirnfläche, vorab wärmevorzubehandeln und dadurch in gezielter Weise vorzuformen. Dies läßt sich insbesondere mit Hilfe der Schweißeinrichtung SE von Figur 1 durchführen. In diese werden die Lichtwellenleiter LW1, LW2 vorzugsweise jeweils entlang einer gedachten Geradenlinie eingelegt. Die freigelegten Lichtleitfasern FE1 bzw. FE2 werden dabei in entsprechenden Halteeinrichtungen HR1, HR2 bekannter Bauart (wie zum Beispiel Manipulatoren) gehalten. Die Halteeinrichtungen HR1, HR2 sind auf einer gemeinsamen Grundplatte GP angeordnet. Mindestens eine der Halteeinrichtungen, im vorliegenden Beispiel HR2, ist durch ein entsprechendes Stellglied CTU über eine Steuerleitung SMX in mindestens eine Richtung verschiebbar ausgebildet. Bevorzugt ist die jeweilige Halteeinrichtung wie zum Beispiel HR2 in alle drei Raumrichtungen, nämlich x, y, z eines kartesischen Koordinatensystems verschiebbar. Die Raumrichtung z gibt dabei eine Längsrichtung, das heißt gewünschte Soll- Fluchtlinie vor, entlang der die Lichtleitfasern FE1 bzw. FE2 bezüglich ihrer Faserkerne fluchtend aufeinander ausgerichtet werden sollen. Die Raum richtung x läuft in Querrichtung zur Längserstreckung der beiden Lichtwellenleiter LW1, LW2, insbesondere senkrecht, das heißt orthogonal zur Raumrichtung z. Die plane Grundplatte GP liegt insbesondere parallel zu der von der x- sowie z-Richtung aufgespannten Ebene. Die Raumrichtung y steht senkrecht zu dieser x-, z-Ebene, daß heißt sie verläuft nach oben oder unten. Die beiden Halteeinrichtungen HR1, HR2 werden zunächst in z-Richtung so weit auseinandergefahren, daß die Stirnflächen der Lichtleitfasern FE1, FE2 in definiertem Längsabstand voneinander positioniert sind. Insbesondere werden die Faserenden im Längsabstand zwischen 5- 10 μm voneinander entfernt positioniert. Die Einstellung des Längsabstandes kann dabei mit Hilfe einer Rechen- und Steuereinrichtung COM erfolgen, die über eine Steuerleitung SL das Stellglied CTU anweist, die Halteeinrichtung HR2 entsprechend der z-Richtung zu verschieben.

Beidseitig der Längserstreckung der beiden freigelegten Lichtleitfasern FE1, FE2 weist die Schweißeinrichtung SE von Figur 1 jeweils eine Schweißelektrode EL11 bzw. EL12 auf, das heißt die Schweißelektrode EL11 ist auf der der Schweißelektrode EL12 gegenüberliegenden Längsseite der Lichtleitfasern FE1, FE2 angeordnet. Insbesondere liegt die Schweißelektrode EL11 der Schweißelektrode EL12 um etwa 180° versetzt gegenüber. Die beiden Schweißelektroden EL11, EL12 dienen als Wärmequelle und sind dabei dem Zwischenraum zwischen den beiden Halteeinrichtungen HR1, HR2 derart zugeordnet, daß sich zwischen ihnen jeweils ein sogenannter Lichtbogen durch Glimmentladung queraxial, insbesondere senkrecht zur Längserstreckung der Lichtleitfasern FE1, FE2 ausbilden kann. Der Verlauf des Bereichs, in dem sich jeweils ein Lichtbogen zwischen den beiden Elektroden EL11, EL12 ausbreiten kann, ist in der Figur 1 der zeichnerischen Einfachheit halber lediglich strichpunktiert in Form einer langgestreckten Ellipse angedeutet und mit WP11 bezeichnet. Die beiden Schweißelektroden EL11, EL12 sind über zugehörige Leitungen, insbesondere Stromleitungen LE11, LE12 an die Spannungsquelle SQ eines Impulsgenerators IG zur Erzeugung von Spannungsimpulsen angeschlossen. Der Impulsgenerator IG ist dabei in der Figur 1 lediglich schematisch mit einer strichpunktierten Umrahmung gekennzeichnet. Die Schweißelektrode EL11 ist über die Stromleitung LE11 beispielhaft mit dem Minuspol der Spannungsquelle SQ des Impulsgenerators IG verbunden, während die Schweißelektrode EL12 über die Stromleitung LE12 am Pluspol der Spannungsquelle SQ hängt. Zweckmäßigerweise ist der Minuspol der Spannungsquelle SQ an Masse angeschlossen, das heißt mit der Erde verbunden. Als Spannungsquelle SQ ist vorzugsweise ein Hochspannungsgenerator vorgesehen. Der Spannungsquelle SQ des Impulsgenerators IG ist eine Schalteinrichtung zugeordnet, mit deren Hilfe die Spannungsquelle SQ in vorgebbaren Zeitabständen von den Elektroden EL11, EL12 abgetrennt werden kann. Dies ist in der Figur 1 der Einfachheit halber lediglich mit Hilfe eines Schalters SW veranschaulicht, der in den an der Stromquelle SQ angeschlossenen Endabschnitt der Stromleitung LE12 eingefügt ist. Die Schalt- bzw. Trenneinrichtung für die Stromquelle SQ wird über eine Steuerleitung WL mit Hilfe der Rechen- und Steuereinrichtung COM in vorgebbaren Zeitabständen ein- und ausgeschaltet. Dies ist in der Figur 1 durch Schließen und Öffnen des Schalters SW mit Hilfe der Steuerleitung WL veranschaulicht. Durch diese zeitliche Tastung bzw. Triggerung der Spannungsquelle SQ lassen sich zwischen den Elektroden EL11, EL12 Spannungsimpulse derart anlegen, daß sich dort in definierten Zeitabständen Glimmentladungsimpulse vorgebbarer Impulsdauer sowie vorgebbarer Entladestromstärke erzeugen lassen.

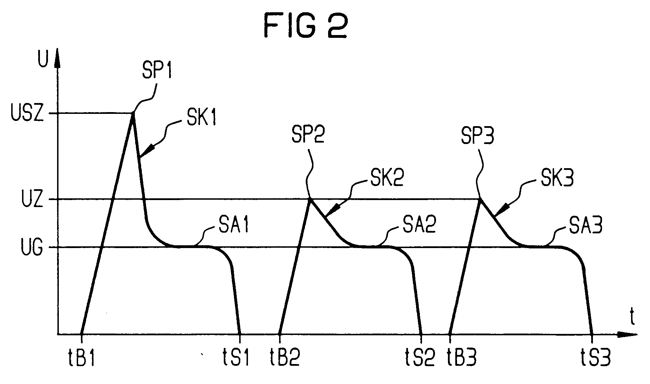

Figur 2 veranschaulicht anhand eines schematischen Spannungs-Zeit-Diagramms beispielhaft den zeitlichen Verlauf von drei Spannungsimpulsen SK1 mit SK3. Dabei ist entlang der Abszisse die Zeit t sowie entlang der Ordinate die Spannung U aufgetragen. Der Spannungsimpuls SK1 wird zum Zeitpunkt tB1 aktiviert und zum Zeitpunkt tS1 > tB1 deaktiviert, das heißt er weist die Impulslänge (tS1 - tB1) > 0 auf. Erst im vorgebbaren zeitlichen Abstand, das heißt nach einer vorgebbaren Totzeit (tB2 - tS1) > 0 folgt der zweite Impuls SK2 zeitlich nach. Er endet zum Zeitpunkt tS2 > tB2 und weist somit die Impulslänge (tS2 - tB2) > 0 auf. Nach Abwarten einer vorgebbaren Totzeit von (tB3 - tS2) > 0 wird der dritte Spannungsimpuls SK3 zum Zeitpunkt tB3 geschaltet. Er wird zum Zeitpunkt tS3 > tB3 ausgeschaltet und dauert somit für die Zeitspanne (tS3 - tB3) > 0 an. Zwischen je zwei aufeinanderfolgenden Spannungsimpulsen wie zum Beispiel SK1, SK2 liegt somit jeweils eine zeitliche Pause, während der zwischen den Elektroden EL11, EL12 von Figur 1 keine Spannung anliegt und somit keine Glimmentladung ausgelöst werden kann. Vorzugsweise sind die Impulslängen der Glimmentladungsimpulse sowie die Totzeiten zwischen den Impulsen annäherungsweise konstant, d.h. gleich lang gewählt. Jeder der Spannungsimpulse SK1 mit SK3 von Figur 2, weist jeweils zu Beginn seines zeitlichen Verlaufs eine Spannungsspitze SP1 mit SP3, das heißt ein Spannungsmaximum auf. Zum erstmaligen Zünden einer Glimmentladung zwischen den beiden Elektroden EL11, EL12 wird zu Beginn des ersten Spannungsimpulses SK1 eine Start-Zündspannung USZ angelegt, die größer als die nachfolgenden Zündspannungen UZ der Spannungsspitzen wie z.B. SP2, SP3 der weiteren Spannungsimpulse wie z.B. SK2, SK3 ist. Die Start-Zünd-Spannung USZ wird zweckmäßigerweise mindestens gleich 4 kV gewählt. Die Zündspannung UZ zur Initiierung der nachfolgenden, weiteren elektrischen Glimmentladungen kann dann in vorteilhafter Weise geringer gewählt werden, da die Luft zwischen den Elektroden EL11, EL12 bereits partiell ionisiert ist. Im zeitlichen Verlauf des jeweiligen Spannungsimpulses SK1 mit SK3 kommt es nach der jeweiligen Spannungsspitze SP1 mit SP3, das heißt nach Initiierung einer Glimmentlandung, zu einem abrupten Abfall der Spannung U auf die Glimm- bzw. Glühspannung UG, da zwischen den beiden Elektroden EL11, EL12 von Figur 1 ein Entladestrom ST zu fließen beginnt. Im zeitlichen Verlauf jedes Spannungsimpulses SK1 mit SK3 ist somit jeweils ein Sattel bzw. eine Abflachung SA1 mit SA3 nach der Spannungsspitze SP1 mit SP3 vorhanden. Pro Spannungsimpuls wird also ein Entladestromimpuls generiert, dessen Entladestromstärke SST in der Figur 1 im Display DSP2 schematisch eingezeichnet ist. Der Entladestrom ST fließt dabei im wesentlichen während der zeitlichen Spanne, während der es zur Glimmentladung bei der Glimmspannung UG kommt.

Das Display bzw. die Anzeigevorrichtung DSP2 der Schweißeinrichtung SE von Figur 1 ist über eine Leitung LDP2 mit der Stromleitung LE12 verbunden, die von der Schalteinrichtung SW des Impulsgenerators IG zur Elektrode EL12 wegführt. Jedesmal, wenn es zu einer Glimmentladung zwischen den beiden Elektroden EL11, EL12 kommt, wird ein Entladestromimpuls ausgelöst. Das Display DSP2 zeigt eine zeitliche Abfolge von solchen Entladestromimpulsen P1 mit Pn, die jeweils schematisch in Form eines schmalen Rechteckimpulses eingezeichnet sind. Entlang der Abszisse des Displays DSP2 ist dabei die Zeit t aufgetragen, während der Ordinate die Entladestromstärke SST für jeden der n Entladestromimpulse P1 mit Pn zugeordnet ist. Mit Hilfe des Impulsgenerators IG der Schweißeinrichtung SE lassen sich die Entladestromimpulse P1 mit Pn in vorgebbaren Zeitabständen voneinander erzeugen, sowie ihre Impulsdauer als auch Entladestromstärke SST in kontrollierbarer Weise einstellen. Der erste Entladestromimpuls P1 wird zum Beispiel mit Hilfe des ersten Spannungsimpulses SK1 von Figur 2 zum Zeitpunkt tE1 aktiviert und zum Zeitpunkt tA1 deaktiviert, so daß er die Impulsdauer von (tA1 - tE1) > 0 aufweist. Ihm folgt nach einer Zeitpause bzw. Totzeit (tE2 - tA1) > 0 der zweite Stromstärkeimpuls P2 - ausgelöst durch den zweiten Spannungsimpuls SK2 von Figur 2 - zum Zeitpunkt tE2 nach.

Er endet zum Zeitpunkt tA2 und weist somit die Impulsdauer von (tA2 - tE2) > 0 auf. Nach dem Stromstärkeimpuls P2 wird nach Abwarten einer Totzeit von (tE3 - tA2) > 0 der dritte Stromstärkeimpuls P3 durch Zünden einer weiteren Glimmentladung - zum Beispiel mit Hilfe des dritten Spannungsimpulses SK3 von Figur 2 - zum Zeitpunkt tE3 aktiviert und zum Zeitpunkt tA3 > tE3 deaktiviert. Erst nach einer weiteren Wartezeit bzw. Pause (tE4 - tA3) > 0 wird die nächste Glimmentladung erzeugt, wobei zwischen den beiden Elektroden EL11, EL12 der Entladestromimpuls P4 während der Zeitdauer tE4 bis tA4 zwischen den beiden Elektroden EL11, EL12 zum fließen kommt. In analoger Weise können weitere Glimmentladungsimpulse zwischen den beiden Elektroden EL11, EL12 in vorgebbaren Zeitabständen voneinander erzeugt werden. Im Display DSP2 steht am Ende der zeitlichen Abfolge von Entladestromimpulsen der Entladestromimpuls Pn, der zum Zeitpunkt tEn aktiviert und zum Zeitpunkt tAn deaktiviert wird. Im Anzeigebeispiel des Displays DSP2 weisen dabei die Entladestromimpulse P1 mit Pn vorzugsweise im wesentlichen dieselbe Impulsdauer sowie weitgehend die gleiche Entladestromstärke SST auf. Selbstverständlich ist es mit Hilfe des Impulsgenerators IG in vorteilhafter Weise auch ermöglicht, für jeden einzelnen Glimmentladungsimpuls dessen Aktivierungszeitpunkt, Impulsdauer sowie Entladestromstärke SST spezifisch, das heißt individuell festzulegen. Durch eine solche in vorgebbaren zeitlichen Abständen getastete, zeitliche Abfolge bzw. Sequenz von diskreten Einzel-Glimmentladungsimpulsen können auf die jeweilige Lichtleitfaser FE1 bzw. FE2 in präzise kontrollierbarer Weise Hitzeimpulse vorgebbarer, definierter Wärmeleistung abgegeben werden. Auf diese Weise kann in gezielter Weise eine dosierte Wärmebehandlung der jeweiligen Lichtleitfaser FE1 bzw. FE2 durchgeführt werden.

Die Spannungsquelle SQ des Impulsgenerators IG von Figur 1 stellt zweckmäßigerweise eine Zündspannung UZ (vergleiche Figur 2) von mindestens 500 V zur Verfügung. Die Glimmspannung UG beträgt vorzugsweise mindestens 500 V.

Besonders zweckmäßig kann es sein, anstelle der Gleichspannungsquelle SQ von Figur 1 eine Wechselspannungsquelle zu verwenden, deren Polarität an den Elektroden EL11, El12 von Figur 1 mit hoher Frequenz wechselt. Eine solche Wechselspannungsquelle arbeitet vorzugsweise mit einer Frequenz von mindestens 14 kHz. Dabei nimmt mit steigender Frequenz die erforderliche Zündspannung UZ zur Auslösung einer Glimmentladung stetig ab. Denn mit zunehmender Frequenz, das heißt schneller werdendem Wechsel der Spannungspolarität kann der Ionenfluß des erzeugten Plasmas zwischen den beiden Elektroden EL11, EL12 dem Spannungswechsel nicht mehr folgen, so daß Ionen zwischen den Elektroden zurückbleiben. Diese Ionen erzeugen eine Raumladung, die eine Reduzierung der Zündspannung zur Folge hat. Insbesondere ist etwa bei einer Frequenz von ca. 10 kHz zwischen der Zünd- und Glimmspannung kein großer Unterschied mehr feststellbar. Durch die Wechselspannung an den Elektroden EL11, EL12 ist somit eine Wechselstrom-Glimmentladung erzeugbar, das heißt, es fließt in den Leitungen LE11, LE12 ein Wechselstrom.

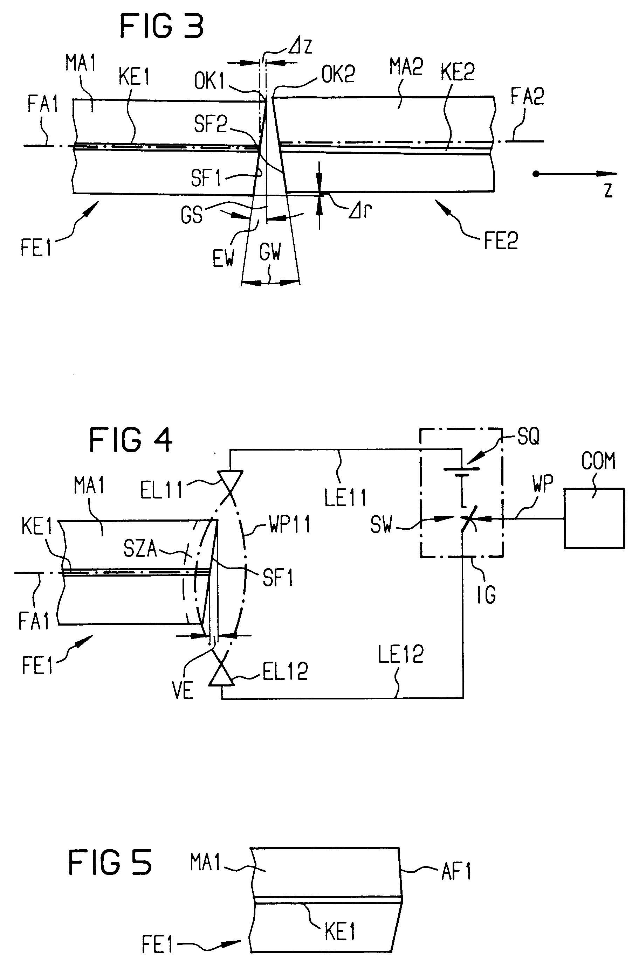

Die Figuren 3 mit 5 veranschaulichen in schematischer Darstellung, wie im einzelnen die Stirnfläche der jeweiligen Lichtleitfaser mit Hilfe von ein oder mehreren Hitzeimpulsen wärmevorbehandelt und dadurch in gezielter Weise vorverformt sowie korrigiert werden kann. Dabei ist die jeweilige Lichtleitfaser vereinfacht im Längsschnitt schematisch sowie vergrößert dargestellt und zusätzlich der Verlauf ihres Faserkerns mit eingezeichnet. Die Lichtleitfaser FE1 weist in ihrem Inneren einen Faserkern (core) KE1 auf, der im wesentlichen entlang der strichpunktiert eingezeichneten Zentralachse FA1 im Inneren des äußeren Mantelglases (cladding) MA1 der Lichtleitfaser FE1 verläuft. Räumlich betrachtet heißt das, daß die Lichtleitfaser FE1 einen im wesentlichen kreiszylinderförmigen Faserkern KE1 in ihrem Zentrum aufweist, auf dem das Mantelglas MA1 als kreiszylinderförmige Beschichtung konzentrisch aufsitzt. Bei Monomodefasern liegt der Außendurchmesser des Faserkerns FE1 vorzugsweise bei etwa 8 bis 10 μm. Der Außendurchmesser einer solchen Monomode-Lichtleitfaser wie zum Beispiel FE1, beträgt insgesamt vorzugsweise etwa 125 μm.

Die Stirnfläche SF1 der Lichtleitfaser FE1 von Figur 3 weist einen Bruchwinkelfehler EW gegenüber der gewünschten Soll-90°-Stirnfläche GS auf. Auch die Lichtleitfaser FE2 weist an ihrer Stirnseite eine Faserendflächenschiefe auf, das heißt ihre Stirnfläche SF2 ist gegenüber einer gewünschten Soll-90°-Stirnfläche um einen Bruchwinkelfehler versetzt. Dabei stehen sich die Lichtleitfasern FE1, FE2 im Längsschnittbild von Figur 3 so gegenüber, daß ihre Endflächen einen Gesamtwinkel GW zwischen sich einschließen. Die jeweilige Lichtleitfaser wie zum Beispiel FE1 weist somit in Faserlängsrichtung betrachtet einen Längsabstand wie z.B. Δz zwischen ihrer Faseroberkante wie z.B. OK1 und ihrem Faserkern wie z.B. KE1 auf. Während bei der ersten Lichtleitfaser FE1 von Figur 3 deren Faserkern KE1 im wesentlichen zentrisch im Mantelglas MA1 liegt, ist für die zweite Lichtleitfaser FE2 beispielhaft angenommen, daß deren Faserkern KE2 im Mantelglas MA2 exzentrisch liegt, d.h. gegenüber der strichpunktiert eingezeichneten Zentralachse FA2 des Mantelglases MA2 radial versetzt sowie parallel zu ihr entlangläuft.

Die beiden Lichtleitfasern FE1, FE2 sind in der Figur 3 bezüglich ihrer Faserkerne KE1, KE2 im wesentlichen fluchtend aufeinander ausgerichtet. Aufgrund der Exzentrizität des Faserkerns KE2 der zweiten Lichtleitfaser FE2 weist deren Glasmantel MA2 dann einen radialen Versatz Δr gegenüber der örtlichen Lage des Glasmantels MA1 der Lichtleitfaser FE1 auf. Werden nun die beiden Lichtleitfasern FE1, FE2 mit solchen schiefwinkeligen Stirnflächen SF1, SF2 entlang der gedachten Fluchtlinie ihrer Faserkerne KE1, KE2 aufeinander zubewegt, so könnten diese Stirnflächen SF1, SF2 sich im ungünstigsten Justierungsfall (- wie in Figur 3 gezeigt -), bei dem sich die Winkelfehler beider Lichtleitfasern FE1, FE2 addieren, lediglich im Bereich ihrer Oberkanten OK1, OK2 berühren. Im übrigen Bereich der Faserstirnflächen SF1, SF2 käme es ansonsten zu keiner Kontaktierung. Die Faserkerne KE1, KE2 könnten somit an ihren Faserstirnflächen SF1, SF2 nicht miteinander in Kontakt gebracht werden, wenn die beiden Lichtleitfasern FE1, FE2 entlang der gemeinsamen z-Fluchtgeraden ihrer Faserkerne KE1, KE2 aufeinander zubewegt würden.

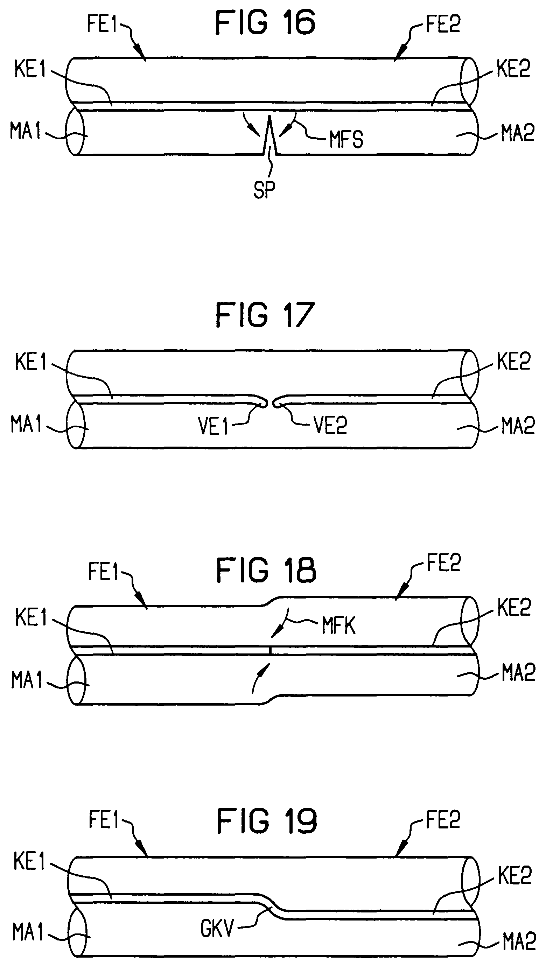

Würden die beiden unter einem Gesamtwinkel GW zueinander stehenden Faserstirnflächen SF1, SF2 dennoch nach einer konventionellen Schweißmethode miteinander verschweißt werden, so würde es gemäß dem vereinfachten Längsschnittbild von Figur 16 zu einem Glasfluß MFS in den Bereich hineinkommen, wo ein Materialdefizit vorliegt. Dies wäre der spitzwinklige Spaltbereich SP, der zwischen den beiden schiefwinkligen Stirnflächen SF1, SF2 bei Kontaktierung lediglich deren Oberkanten OK1, OK2 gebildet wird. Dieser Glasfluß MFS würde auch die Faserkerne KE1, KE2 mit erfassen und zu einer gleichphasigen Verbiegung VE1, VE2 der Enden der Faserkerne KE1, KE2 entsprechend dem vereinfachten Längsschnittbild von Figur 17 führen.

Um zu erreichen, daß die Faserkerne KE1, KE2 an den Stirnseiten der Lichtleitfasern FE1, FE2 entlang ihrer gewünschten Soll-Fluchtlinie in z-Richtung ungehindert miteinander kontaktiert werden können, wird die jeweilige Lichtleitfaser im Bereich ihrer Stirnfläche mit Hilfe mindestens eines Hitzeimpulses der Schweißeinrichtung SE von Figur 1 wärmevorbehandelt und dadurch in gezielter Weise vorverformt. Figur 4 veranschaulicht diese Vorverformung in beispielhafter Weise für die Stirnfläche SF1 der Lichtleitfaser FE1. Dazu wird lediglich die Stirnfläche SF1 der Lichtleitfaser FE1 in den strichpunktiert angedeuteten Lichtbogenbereich WP11 zwischen den beiden Elektroden EL11, EL12 gebracht. Mit Hilfe des Impulsgenerators IG wird dann mindestens ein Glimmentladungsimpuls zwischen den beiden Elektroden EL11, EL12 erzeugt, so daß mindestens eine Hitzeimpuls auf die Stirnfläche SF1 abgegeben wird und diese lediglich oberflächlich in einer Randzone SZA auf Erweichungstemperatur bringt und damit anschmilzt. Die Randtiefenzone SZA, bis zu der die Stirnfläche in -Richtung angeschmolzen wird, ist in der Figur gestrichelt eingezeichnet. Durch die Verwendung von Glimmentladungsimpulsen hoher Entladestromstärke bei gleichzeitig kurzer Impulsdauer wird lediglich eine oberflächliche Schicht der Stirnfläche SF1 der Lichtleitfaser FE1 von Figur 4 angeschmolzen, das heißt auf Erweichungstemperatur gebracht, so daß sich nur dort ein flüssiger Oberflächenfilm ausbilden kann. Aufgrund der Oberflächenspannung kommt es lediglich oberflächlich zu einem Materialfluß, der zu einem Materialausgleich - insbesondere in den Eckbereichen des Faserendes - und damit Abrundung der Faserstirnfläche SF1 führt. Somit verbleibt die ursprüngliche Form und Lage, insbesondere geradlinige Längserstreckung, des Faserkerns KE1 im Endbereich der Faser FE1 weitgehend erhalten. Die Stirnfläche SF2 der zweiten Lichtleitfaser FE2 kann dann in analoger Weise abgerundet werden.

Zum Anschmelzen der Faserstirnfläche wie z.B. SF1 der jeweiligen Lichtleitfaser wie z.B. FE1 werden vorzugsweise mindestens 3 Hitzeimpulse, insbesondere zwischen 3 und 20 Hitzeimpulse abgegeben. Die Faserstirnfläche SF1 wird dabei lediglich höchstens bis zu einer Materialschichttiefe von 50 $\mu m$, insgesamt zwischen 10 und 40 $\mu m$ oberflächlich angeschmolzen. Für den jeweiligen Glimmentladungsimpuls wird vorzugsweise eine Lichtbogen-Entladestromstärke von mindestens 60 mA verwendet. Die Totzeit zwischen zwei aufeinander folgenden Glimmentladungsimpulsen wird vorzugsweise mindestens gleich etwa 500 ms gewählt. Für den jeweiligen Glimmentladungsimpuls, wie zum Beispiel WP11, wird vorzugsweise eine Impulsdauer von höchstens 30 msec gewählt.

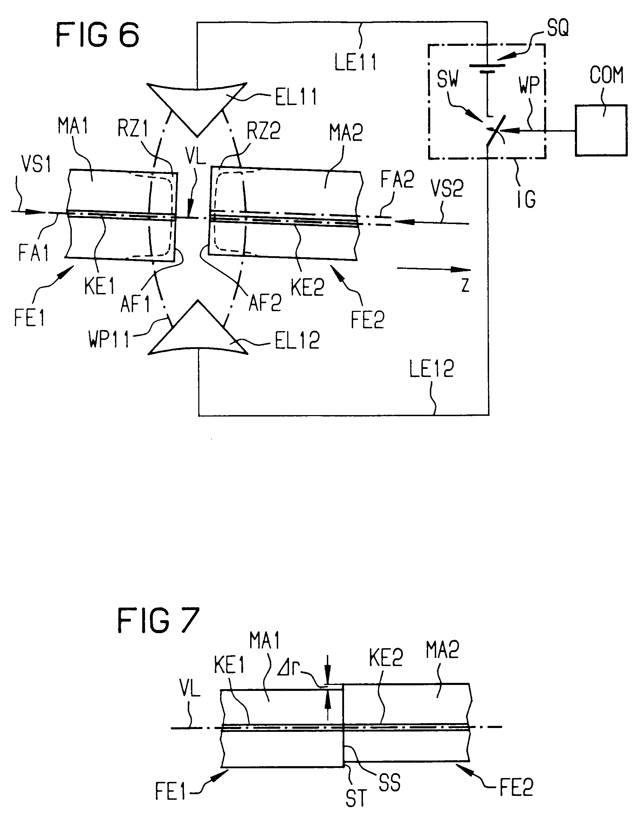

Allgemein ausgedrückt werden also Glimmentladungsimpulse sehr hoher Schweißstromstärke mit äußerst kurzen Impulslängen, d.h. sehr kurzen Schweißzeiten verwendet. Dadurch ist es ermöglicht, die Stirnfläche SF1 so „abzurunden", daß sich eine annäherungsweise 90°- Stirnfläche ausbildet, d.h. die fehlerhafte Stirnfläche SF1 nachkorrigieren läßt. Figur 5 zeigt eine solche abgerundete Faserstirnfläche AF1 beispielhaft für die Lichtleitfaser FE1. In z-Richtung betrachtet springen bzw. stehen gegenüber der Stirnfläche des Faserkerns KE1 nun keine Teile des Glasmantels MA1 mehr vor. Gleichzeitig behält der Faserkern KE1 im Bereich der Stirnfläche AF1 im wesentlichen seine ursprünglich vorgegebene, räumliche Lage bei, daß heißt er erstreckt sich weiterhin im wesentlichen geradlinig in z-Richtung. Durch die lediglich oberflächliche Wärmebehandlung im Bereich der Stirnfläche der Lichtleitfaser FE1 wird also weitgehend vermieden, daß es zu unerwünschten Verformungen bzw. Verbiegungen des Faserkerns KE1 kommt. Bevorzugt durch die Verwendung einer zeitlichen Abfolge von diskreten Hitzeimpulsen, insbesondere Glimmentladungsimpulsen, wird es somit ermöglicht, die an der Stirnfläche der jeweiligen Lichtleitfaser wirksam werdende Wärmemenge in präzise kontrollierbarer Weise zu dosieren. Auf diese Weise ist es ermöglicht, annäherungsweise eine 90°-Endfläche zu erzeugen, das heißt die Zentralachse der jeweiligen Lichtleitfaser bildet annäherungsweise eine Flächennormale zur wärmevorbehandelten Stirnfläche dieser Lichtleitfaser. Mit Hilfe der gezielten Abgabe von einzelnen, d.h. diskreten Glimmentladungsimpulsen ist es zudem ermöglicht, Faserausbrüche und Nasen an der Stirnfläche der jeweiligen Lichtleitfaser wie zum Beispiel FE1 zu beseitigen.

Zu dieser gezielten Vorverformung der Faserendflächen kann es ggf- auch zweckmäßig sein, die Lichtleitfasern FE1, FE2 mit ihren Stirnflächen SF1, SF2 gemeinsam im jeweiligen Lichtbogenbereich bzw. in der jeweiligen Lichtbogenzone WP11 zu positionieren. Dies ist beispielhaft in Figur 1 veranschaulicht, wo die beiden Faserenden in den räumlichen Bereich der Lichtbogenzone WP11 gleichzeitig eintauchen. Selbstverständlich kann es gegebenenfalls auch zweckmäßig sein, die Lichtleitfasern FE1, FE2 zeitlich nacheinander, das heißt jeweils einzeln in die Lichtbogenzone WP11 einzufahren und dort jeweils separat im Bereich ihrer Stirnfläche nach dem erfindungsgemäßen Prinzip abzurunden.

Die Kontrolle der Faserendflächen auf unerwünschte Bruchwinkelfehler hin kann insbesondere mit Hilfe einer Abbildungsoptik durchgeführt werden, wie sie in der US 5,011,259 angegeben ist. Die wesentlichen Bauteile dieser Abbildungsoptik sind in der Figur 1 zusätzlich mit eingezeichnet und der Schweißeinrichtung SE zugeordnet. Über eine Lichtwelle LQ der Abbildungsoptik wird mittels einer Linse LS1 ein Lichtstrahl LE im wesentlichen senkrecht zur x,z-Ebene auf die Enden der Lichtleitfasern FE1, FE2 gerichtet, wobei durch diese Faserenden eine Abschattung des Lichtstrahls LE eintritt. Die Lichtquelle LQ sendet dabei vorzugsweise weißes Licht in Richtung auf die Enden der Lichtleitfasern FE1, FE2 und beleuchtet diese. Dazu ist vorzugsweise als Lichtquelle LQ eine Halogenlampe oder Leuchtdiode vorgesehen. Auf der der Lichtquelle LQ sowie der Linse LS1 gegenüberliegenden Seite der Lichtleitfasern FE1, FE2 ist eine weitere Linse LS2 im Strahlengang des Lichtstrahls LE angeordnet, der eine im wesentlichen rechteckförmige Öffnung OP in der Grundplatte GP durchdringt. Über die Linse LS2 werden die Enden der Lichtleitfasern FE1, FE2 in ihren Schatten SH1, SH2 auf eine Fläche geworfen, bzw. in eine Bildebene abgebildet, die in der x,z-Ebene liegt. In dieser Projektionsebene werden die Schatten bzw. Projektionen SH1, SH2 der Enden der Lichtleitfasern FE1, FE2 mit Hilfe einer Abtasteinrichtung SCD aufgenommen, so daß für jede Abbildung bzw. jedes Schattenbild SH1, SH2 eine Intensitätsverteilung erhalten wird. Als Abtasteinrichtung ist vorzugsweise eine Videokamera vorgesehen, deren Bildsensor einen bestimmten Bildausschnitt BS der x,z -Projektionsebene erfaßt, der in der Figur 3 mit Hilfe einer strichpunktierten, rechteckförmigen Umrahmung gekennzeichnet ist. Bei dieser Durchleuchtung der Lichtleitfaserenden wirkt die jeweilige blanke, das heißt sauber entcoatete Lichtleitfaser wie eine Zylinderlinse für das sie durchdringende Licht. Gleichzeitig ist es mit Hilfe dieser Abbildungsoptik der US 5,011,259 ermöglicht, die Lichtleitfasern FE1, FE2 bezüglich ihrer Faserkerne fluchtend aufeinander auszurichten. Dazu werden die Abbildungen bzw. Projektionen SH1, SH2 der Enden der Lichtleitfasern FE1, FE2 jeweils entlang einer zugeordneten Meßspalte MS1, MS2 spaltenweise abgetastet, und zwar jeweils in eine Richtung quer zu den Faserzentralachsen FA1, FA2, insbesondere in x-Richtung. Dieser Abtastvorgang ist jeweils schematisch durch Pfeile MS1, MS2 angedeutet, welche jeweils parallel zur gestrichelten Linie SB verlaufen, die der Symmetrielinie der Gesamtanordnung in x-Richtung entspricht und die genaue Soll-Stoßstelle der Stirnflächen der Lichtleitfasern FE1, FE2 markiert. Die spaltenweise aufgenommenen Intensitäts- bzw. Helligkeitswerte des jeweiligen Schattenbildes SA1 bzw. SA2 werden über Leitungen SL1 bzw. SL2 von der Abtasteinrichtung SCD jeweils getrennt an die Rechen- und Steuereinrichtung COM übertragen und dort zu Auswertezwecken gespeichert. In dieser Rechen- und Steuereinrichtung COM können die getrennt übertragenen Intensitätsinformationen entsprechend den Meßspalten MS1 bzw. MS2 miteinander verknüpft werden. Da die jeweilige Lichtleitfaser als Zylinderlinse bei ihrem Durchleuchten bewirkt, weist ihr zugehöriges Schattenbild etwa in der Mitte deren Schattenbereichs ein Maximum der Lichtintensität auf. Durch die Auswertung der örtlichen Lage dieses Maximums ist es in vorteilhafter Weise möglich, die Lage der Faserkernachse der jeweiligen Lichtleitfaser FE1 bzw. FE2 zu bestimmen. Die Verschiebung der beiden Maxima in den Intensitätsverteilungen der Schattenbilder SA1, SA2 gegeneinander ist dabei insbesondere proportional zum radialen Versatz der Längsachsen FA1, FA2 der beiden Lichtwellenleiter-Faserenden. Es ist somit lediglich eine Verschiebung zumindest einer der Lichtleitfasern wie zum Beispiel FE2 solange durchzuführen, bis die Verschiebung der Längsachsen FA1, FA2 zu null gemacht wird, wodurch dann die Ausrichtung der Lichtleitfasern wie hier in der x,z-Ebene fluchtend ist. Analog dazu kann in den anderen Lageebenen wie zum Beispiel in der y,z-Ebene ebenfalls eine fluchtende Ausrichtung der Lichtleitfaserenden bezüglich ihrer Faserkerne vorgenommen werden.

Selbstverständlich kann es gegebenenfalls auch zweckmäßig sein, die beiden Lichtleitfasern FE1, FE2 bezüglich ihrer Faserkerne mit Hilfe einer anderen gängigen Ausrichtmethode fluchtend aufeinander auszurichten. So kann es zum Beispiel auch zweckmäßig sein, in den esten Lichtwellenleiter LW1 mit Hilfe eines optischen Senders TR, insbesondere einer Laserdiode, ein Sende-Strahlungsfeld SSF mit Hilfe eines Biegekopplers BK1 in Richtung auf die zu bildende Schweißstelle einzukoppeln. Die in den Lichtwellenleiter LW1 eingekoppelten Meßlichtanteile ML treten dabei aus der Stirnfläche der Lichtleitfaser FE1 aus und werden in die Stirnfläche der Lichtleitfaser FE2 übergekoppelt. Anteile dieses übergekoppelten Meßlichts ML* können dann aus dem Lichtwellenleiter LW2 zum Beispiel nach dem Biegekopplerprinzip mit Hilfe eines Biegekopplers BK2 ausgekoppelt werden. Das ausgekoppelte Empfangsstrahlungsfeld ESF des übergekoppelten Meßlichts ML* wird in der Figur 1 mit Hilfe eines lichtempfindlichen Elements LE, insbesondere eine Photodiode, erfaßt und über eine Meßleitung LLE an die Rechen- und Steuereinrichtung zur Auswertung weitergeleitet. Während die Enden der Lichtleitfasern FE1, FE2 räumlich relativ zueinander verschoben werden, wird dabei die Transmission des übergekoppelten Meßlichts ML* mit Hilfe der Rechen- und Steuereinrichtung COM ermittelt. Insbesondere kann es dabei zweckmäßig sein, die Dämpfung des übergekoppelten Lichts mit Hilfe der in der US 5,078,489 beschriebenen Meßmethode zu bestimmen. Dort, wo die Transmission des übergekoppelten Meßlichts ML am größten ist, das heißt dessen Dämpfung am geringsten, liegt dann eine fluchtende Ausrichtung der Faserkerne der Lichtleitfasern FE1, FE2 vor. In der Figur 1 kann beispielhaft die Lichtleitfaser FE2 in der Halteeinrichtung HR2 gegenüber der Lichtleitfaser FE1 in der feststehenden Halteeinrichtung HR1 mit Hilfe des Stellgliedes CTU in x,z-sowie y-Richtung verschoben werden. Die Ortskoordinaten, die bei der fluchtenden Ausrichtung der Faserkerne, d.h. bei minimaler Dämpfung vorliegen, können dabei vom Stellglied CTU über eine Datenleitung SL* an die Rechen- und Steuereinrichtung COM zur weiteren Auswertung übergeben werden.

Die fluchtende Ausrichtung der Faserkerne KE1, KE2 der beiden Lichtleitfasern FE1, FE2 von Figur 1 wird zweckmäßigerweise zeitlich nach einer etwaigen Abrundung der Stirnflächen der Lichtleitfasern FE1, FE2, das heißt nach Abschluß der Präparationsmaßnahmen an den Faserstirnflächen durchgeführt.

Diese in x,y- sowie z-Richtung Kern-zu-Kern-positionierten Lichtleitfasern FE1, FE2 stehen sich in der Figur 6 in vorgebbarem Längsabstand in z-Richtung gegenüber. Beide Lichtleitfasern FE1, FE2 tauchen mit ihren vorzugsweise vorher abgerundeten Stirnflächen AF1, AF2 in den von der Glimmentladung der Elektroden EL11, EL12 erfaßten Bereich WP11 ein. Mit Hilfe des Impulsgenerators IG wird mindestens ein Glimmentladungsimpuls, insbesondere eine getriggerte Abfolge von mehreren Glimmentladungsimpulsen erzeugt, so daß auf die Stirnfläche AF1, AF2 des jeweiligen Lichtleitfaserendes FE1, FE2 ein oder mehrere Hitzeimpulse dosiert abgegeben werden können. Insbesondere durch eine solche gepulste Glimmentladung ist es ermöglicht, lediglich eine Randzone der jeweiligen Lichtleitfaser FE1 bzw. FE2 im Bereich deren Stirnfläche AF1 bzw. AF2 auf Erweichungstemperatur zu bringen und dadurch kurzzeitig anzuschmelzen. Mit anderen Worten heißt das, daß das Ende der jeweiligen Lichtleitfaser FE1 bzw. FE2 lediglich oberflächlich und nicht zu tief ins Faserinnere hinein angeschmolzen wird, so daß sich nur dort im Oberflächenbereich eine Materialerweichung bzw. Verflüssigung als dünner Film ergibt. In der Figur 6 ist die oberflächlich angeschmolzene Randzone des Glasmaterlais der Lichtleitfaser FE1 gestrichelt eingezeichnet und mit RZ1 bezeichnet. Analog dazu ist auch die Anschmelzungszone im Oberflächenbereich des Faserendes FE2 gestrichelt eingezeichnet und mit RZ2 bezeichnet. Die jeweilige Randzone erfaßt dabei zum einen einen schmalen, annäherungsweise kreisringförmigen Außenrand des Faserquerschnitts von der Außenoberfläche des Fasermantels radial nach innen zum Faserzentrum betrachtet. Zum anderen wird die Randzone auch durch ein schmales Band im Oberflächenbereich der Faserstirnfläche selbst gebildet, das im Faserlängsschnitt betrachtet von der Stirnseite her in Faserlängsrichtung ins Faserinnere hinein mit geringer Schichttiefe aufgeweicht bzw. angeschmolzen wird. Durch die definierte, zeitliche Abfolge von Einzel-Glimmentladungsimpulsen wird die jeweilige Lichtleitfaser FE1 bzw. FE2 im Bereich ihrer Stirnflächen AF1, AF2 vorzugsweise lediglich höchstens bis zu einer Materialschichttiefe von 50 μm, insbesondere zwischen 10 und 40 μm oberflächlich angeschmolzen.

Denn durch entsprechende Wahl der Impulsparameter - insbesondere Impulsdauer, Entladestromstärke des jeweiligen Glimmentladungsimpulses sowie der zeitlichen Pause bzw. Totzeit zwischen zwei aufeinanderfolgenden Glimmentladungsimpulsen - kann die Wärmeübertragung von der Glimmentladung auf die Enden der Lichtleitfasern FE1, FE2 derart beeinflußt werden, daß während der Glimmentladungsimpulse lediglich die Randbereiche bzw. Randzonen RZ1, RZ2 des Mantelglases auf dessen Erweichungstemperatur (1730° C) gebracht und dadurch angeschmolzen werden.

Um diese gezielte Fasererweichung lediglich in den Randzonen RZ1, RZ2 zu erreichen, die Faserkerne KE1, KE2 im Faserinneren hingegen weitgehend unerweicht bzw. unangeschmolzen, d.h. möglichst starr, zu lassen, wird die Impulsdauer und/oder Wärmeleistung des jeweiligen Hitzeimpulses und/oder der zeitliche Abstand zwischen je zwei aufeinanderfolgenden Hitzeimpulsen insbesondere derart eingestellt, daß ein möglichst großer Temperaturabfall, d.h. Temperaturgradient von der Faser-Außenoberfläche in das Faserinnere hinein erreicht wird. Dazu wird mit Hilfe der Glimmentladungsimpulse eine möglichst hohe Wärmemenge in möglichst kurzer Zeit auf das Ende der jeweiligen Lichtleitfaser gegeben. Dies bedeutet, daß die Impulsdauer des jeweiligen Glimmentladungsimpulses möglichst kurz gewählt wird, um die Zeitspanne für die Wärmeausbreitung ins Faserinnere möglichst gering zu halten. Weiterhin wird die Wärmeleistung jedes Hitzeimpulses, insbesondere Glimmentladungsimpulses, zweckmäßigerweise möglichst so groß gewählt, daß die jeweilige Lichtleitfaser FE1, FE2 an ihrer Außenoberfläche pro Hitzeimpuls mindestens auf Erweichungstemperatur gebracht werden kann. Die Temperatur bzw. die Wärmemenge des jeweiligen Glimmentladungsimpulses wird dabei vorzugsweise über den Schweißstrom bzw. Entladestrom ST der Glimmentladung geregelt.

Für den jeweiligen Glimmentladungsimpuls wird dabei zweckmäßigerweise eine Lichtbogenentladestromstärke SST von mindestens 60 mA verwendet. Es wird für ihn zweckmäßigerweise eine Impulsdauer von höchstens 30 ms gewählt.

Die Glimmentladungsimpulse sind also durch äußerst kurze Schweißzeiten, das heißt Impulsdauern sowie duch eine sehr hohe Heizleistung charakterisiert. Weiterhin wird die Totzeit zwischen zwei aufeinanderfolgenden Hitzeimpulsen, insbesondere Glimmentladungsimpulsen, zweckmäßigerweise möglichst so groß gewählt, daß es zu keiner Akkumulation bzw. Aufsummierung von Wärme im Materialinneren der jeweiligen Lichtleitfaser FE1 bzw. FE2 kommen kann, was ansonsten zu einer Kernanschmelzung führen würde. Die Totzeit zwischen zwei aufeinanderfolgenden Glimmentladungsimpulsen wird zweckmäßigerweise mindestens gleich 500 ms gewählt. Vorzugsweise wird dieselbe Pause zwischen je zwei zeitlich aufeinanderfolgenden Glimmentladungsimpulsen eingestellt.

Allgemein betrachtet wird also versucht, im Faserquerschnitt und/oder Faserlängsschnitt an der Faserstirnseite einen möglichst derart steilen Temperaturabfall von der Außenoberfläche ins Faserinnere zu erreichen, daß zwar die Faseroberfläche anschmilzt, der Faserkern aber weitgehend fest, d.h. noch unangeschmolzen bleibt und seine ursprüngliche Form sowie Lage weitgehend unverändert beibehält. Die Erzeugung eines solch ausreichenden Temperaturgefälles innerhalb der jeweiligen Lichtleitfaser von dessen Außenoberfläche ins Faserinnere hinein wird insbesondere auch durch die schlechte Wärmeleitfähigkeit deren Faserwerkstoffs Siliziumdioxid $SiO_2$ begünstigt. So wirkt Quarzglas z.B. mit einem Wärmeleitkoeffizienten von etwa $\lambda=1{,}36$ W/mK bei 293 Kelvin als Wärmeisolator. Im Vergleich hierzu weisen Wärmeleiter einen wesentlich größeren Wärmeleitkoeffizienten auf (wie zum Beispiel Aluminium einen Wärmeleitkoeffizienten von etwa $\lambda$=203 W/mK bei 293 Kelvin). Ein solcher Temperaturgradient von außen nach innen ist insbesondere mit Hilfe einer gepulsten Glimmentladung erzeugbar. Es ist somit ermöglicht, die Lichtleitfasern FE1, FE2 im Bereich ihrer Stirnflächen lediglich kurzzeitig sowie lediglich im Oberflächenbereich RZ1, RZ2 anzuschmelzen, während die geradlinige Erstreckung sowie fluchtende Ausrichtung der Faserkerne KE1, KE2 im Faserinneren weitgehend erhalten bleibt. Um eine Kernerweichung oder -anschmelzung weitgehend zu vermeiden, kann es zweckmäßig sein, die Impulsdauer insbesondere kürzer als diejenige Zeitdauer zu wählen, die ein Hitzeimpuls von der Fasermantelaußenfläche radial nach innen bis ins Faserzentrum hinein braucht, um dort den Faserkern anzuschmelzen. Das ist also diejenige Zeitdauer, um die ein Hitzeimpuls von der Glasmanteloberfläche radial nach innen zum Faserkern durch die Wärmeleitungsträgheit des Glasmaterials zeitverzögert weitergeleitet wird. Die Impulsdauer wird also so kurz und die Impulsleitung so hoch gewählt, daß die Zeit für den Wärmedurchsatz zum Faserkern nicht zu dessen Ausschmelzung ausreicht. Bevorzugt wird die auf die Fasermanteloberfläche abgegebene Hitzemenge derart reguliert, daß der Faserkern höchstens auf die Hälfte der Außentgemperatur an der Faseroberfläche aufgeheizt wird.

Während die Glimmentladung gepulst auf die Faserenden FE1, FE2 im Bereich deren Stirnflächen AF1, AF2 abgegeben werden, werden die bezüglich ihrer Faserkerne fluchtend aufeinander ausgerichteten Lichtleitfasern FE1, FE2 zweckmäßigerweise entlang ihrer gewünschten Soll-Fluchtlinie in z-Richtung aufeinander zubewegt, bis sie sich stirnseitig kontaktieren. Dies ist in der Figur 1 mit Hilfe zweier Bewegungspfeile VS1, VS2 angedeutet, die entlang der gemeinsamen Fluchtgeraden VL der beiden Faserkerne KE1, KE2 entgegengesetzt zueinander gerichtet sind. Die beiden Lichtleitfasern FE1, FE2 werden mit ihren lediglich im Oberflächenbereich RZ1, RZ2 angeschmolzenen Stirnflächen AF1, AF2 derart in Kontakt gebracht und miteinander verklebt, daß ihre Faserkerne KE1, KE2 sich im wesentlichen entlang der gedachten, gemeinsamen Verbindungsgeraden VL erstrecken, die die Fluchtlinie für die beiden Faserkerne KE1, KE2 bildet. Die lediglich oberflächlich erweichten Faserenden werden dabei lediglich geringfügig ineinander gefahren, das heißt die Lichtleitfasern FE1, FE2 werden lediglich mit sehr geringen Faserüberhub aneinandergeheftet. Vorzugsweise werden die Faserenden FE1, FE2 beim Zusammenkleben ihrer lediglaich oberflächlich erweichten Stirnflächen AF1, AF2 auf einer Längsstrecke von höchstens 20 $\mu$m, insbesondere zwischen 1 und 20 $\mu$m ineinandergefahren. Dadurch ist eine Verformung, insbesondere eine Stauchung oder ein Ausknicken, der Stirnflächen weitgehend vermieden. Die Faserkerne verbleiben somit vom Haftvorgang weitgehend unbeeinflußt und damit unverformt. Dadurch, daß die Enden der Lichtleitfasern FE1, FE2 lediglich in einem Oberflächenbereich RZ1, RZ2 ihrer Stirnflächen AF1, AF2 angeschmolzen werden, ist es ebenfalls weitgehend vermieden, daß es zu einer ungewünschten Verformung bzw. Verschiebung der zuvor fluchtend aufeinander ausgerichteten Faserkerne KE1, KE2 kommt, d.h. die Fasern verbleiben Kern zu Kern positioniert aneinanderhaften. Eine unzulässig hohe Spleißdämpfung ist damit von vornherein vermieden.

Figur 7 zeigt das Ergebnis der oberflächlichen Verklebung der Faserstirnflächen AF1, AF2 der beiden Lichtleitfasern FE1, FE2 anhand eines vereinfachten Längsschnittbildes. Die Faserkerne KE1, KE2 erstrecken sich auch nach der Verklebung im wesentlichen entlang ihrer gemeinsamen gedachten Fluchtlinie VL, die strichpunktiert eingezeichnet ist. Da für die Lichtleitfaser FE2 ein exzentrisch positionierter Faserkern KE2 innerhalb des Mantelglases MA2 angenommen worden ist, ergibt sich allerdings ein radialer Versatz der Glasmäntel MA1, MA2 gegeneinander. Der Glasmantel MA2 ist lateral bezogen auf die Faser-Fluchtlinie VL,insbesondere in radialer Richtung um $\Delta r$ gegenüber dem Glasmantel MA1 verschoben. Es ergibt sich somit im Bereich der Fusionsschweiß- Klebestelle SS der beiden Stirnflächen beim Übergang des Glasmantels MA1 zum Glasmantel MA2 eine Stoßkante bzw. Abbruchkante in deren Außenkontur.

Die Verwendung einer gepulsten Glimmentladung macht es somit durch die dosiert wirksam werdende Wärmemenge möglich, in einem eigenen, zeitlich separaten Verfahrensschritt die lediglich oberflächlich erweichten Faserstirnflächen der Kern-zu-Kern-positionierten Lichtleitfasern miteinander schmelzzuverkleben und zwar ohne Rücksicht auf die Zugfestigkeit dieser Klebeverbindung. Hauptaugenmerk wird also insbesondere zunächst auf die fluchtende Ausrichtung der Faserkerne und deren Aneinanderheftung gerichtet, während die Zugfestigkeit dieser Klebeverbindung zunächst unerheblich ist.

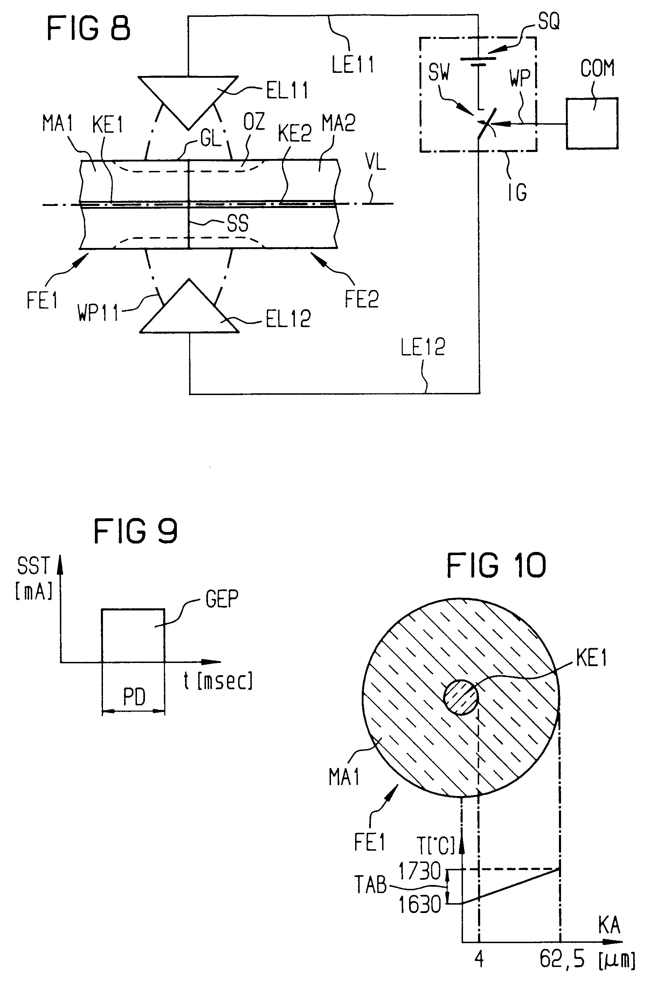

Um die Randkluft bzw. den unstetigen Übergang ST zwischen den beiden Glasmänteln MA1, MA2 der beiden aneinandergehefteten Lichtleitfasern FE1, FE2 von Figur 7 einebnen bzw. glätten zu können und für die Schweißverbindung eine ausreichende Zugfestigkeit bereitstellen zu können, werden in einem nachfolgenden, separaten, das heißt eigenen Verfahrensschritt ein oder mehrere Hitzeimpulse auf die Außenoberfläche der Glasmäntel MA1, MA2 derart abgegeben, daß diese lediglich in einen Oberflächenbereich OZ (vgl. Figur 8) rings um ihren Außenumfang angeschmolzen werden. Dazu werden mit Hilfe des Impulsgenerators IG der Schweißeinrichtung SE von Figur 1 die Impulsdauer, die Ladestromstärke des jeweiligen Glimmentladungsimpulses und/oder die Totzeit zwischen je zwei aufeinanderfolgenden Glimmentladungsimpulsen zweckmäßigerweise derart eingestellt, daß die zu den Glasmänteln MA1, MA2 übertragene Wärmemenge nicht zu tief in das Innere der jeweiligen Lichtleitfaser FE1, FE2 geleitet werden kann. Zum oberflächlichen Anschmelzen der Glasmäntel MA1, MA2 werden zweckmäßigerweise mindestens 10 Hitzeimpulse, vorzugsweise zwischen 20 und 500 Hitzeimpulse, auf die jeweilige Lichtleitfaser FE1, FE2 abgegeben. Figur 8 veranschaulicht diesen zweiten, separaten Arbeitsschritt zur Erhöhung der Zugfestigkeit der Schweißverbindung anhand eines schematischen sowie vergrößerten Längsschnittbildes der beiden miteinander schweißverklebten Enden der Lichtleitfasern FE1, FE2. Die beiden aneinandergehefteten Faserenden sind dabei vorzugsweise ortsfest angeordnet, d.h. sie werden insbesondere nicht mehr wie beim vorausgehenden „Heftvorgang" ineinandergefahren oder in sonstiger Weise gegeneinander bewegt. Im Bereich der Stoßstelle SS der beiden zuvor aneinandergehefteten Stirnflächen der Lichtleitfaser FE1, FE2 werden die Glasmäntel MA1, MA2 lediglich in der oberflächlichen Randzone OZ, die gestrichelt angedeutet ist, auf Erweichungstemperatur gebracht, und dort angeschmolzen. Lediglich dort bildet sich ein feuchter Glasschmelzefilm aus, während eine Erweichung oder gar Anschmelzung der Faserkerne KE1, KE2 weitgehend vermieden ist. Dies kann wiederum dadurch erreicht werden, daß die Trägheit der Wärmeausbreitung im Glasmaterial der Lichtleitfasern ausgenutzt wird. Durch die gepulste Glimmentladung kann insbesondere erreicht werden, daß ein möglichst steiler Temperaturabfall innerhalb der jeweiligen Lichtleitfaser FE1 bzw. FE2 erreicht wird. Dazu wird die Impulsdauer des jeweiligen Glimmentladungsimpulses möglichst so kurz gewählt, daß dessen Schweißzeit zur Wärmeausbreitung ins Faserzentrum nicht ausreicht. Weiterhin wird die Entladestromstärke des jeweiligen Glimmentladungsimpulses derart groß gewählt, daß der Glasmantel der jeweiligen Lichtleitfaser an seiner Außenoberfläche mindestens auf seine Erweichungstemperatur erwärmt werden kann. Die abgegebene Wärmeleistung jedes Glimmentladungsimpulses wird also zweckmäßigerweise derart dimensioniert, daß das Mantelglas MA1 bzw. MA2 während eines einzelnen Glimmentladungsimpulses bereits auf seine Erweichungstemperatur von etwa 1730° C gebracht werden kann. Insbesondere durch mehrere solche Pulse kann dann eine ausreichende Verschmelzug der Fasermäntel erreicht werden. Durch die lediglich oberflächliche Anschmelzung der Glasmäntel MA1, MA2 im Bereich der Stoßstelle SS der Stirnflächen der Lichtleitfasern FE1, FE2 kommt es lediglich dort zu einem Materialfluß und damit zu einer stoffschlüssigen Verbindung zwischen den beiden Glasmänteln MA1, MA2. Auf diese Weise werden die Außenoberflächen der Giasmäntel MA1, MA2 im Bereich der Stoßstelle SS der Faserstirnflächen geglättet, das heißt es bildet sich ein stetiger Übergang GL von einem Glasmantel zum anderen aus. Somit wird auch wieder im Bereich der Spleißstelle SS ein im wesentlichen kreiszylinderförmiger Glasmantel hergestellt. Durch die Glättung der Glasmäntel wird zudem in vorteilhafter Weise erreicht, daß die Biegebelastbarkeit und Bruchfestigkeit der Spleißverbindung erhöht wird. Die Faserkerne KE1, KE2 im Inneren der Glasmäntel MA1, MA2 bleiben während dem Verschmelzen der Glasmäntel hingegen weitgehend unerweicht und damit stabil. Insbesondere ist durch die gepulste Glimmentladung weitgehend vermieden, daß es zu einer Anschmelzung der Faserkerne KE1, KE2 im Inneren der Glasmäntel MA1, MA2 kommt.

Zusammenfassend betrachtet kann durch die zeitliche Trennung des Arbeitsschrittes „Verklebung der lediglich oberflächlich erweichten Faserstirnflächen der Kern-zu-Kern-positionierten Lichtleitfasern" von dem zeitlich nachfolgenden, separaten Arbeitsschritt „Verschmelzen der Glasmäntel lediglich im Oberflächenbereich", d.h. durch die zeitlich getrennte Verschweißung der Faserkerne und der Fasermäntel, kann weitgehend sichergestellt werden, daß die einmal fluchtend aufeinander ausgerichteten Faserkerne ihre räumliche Lage weitgehend beibehalten. Ein Verformen oder Verbiegen der Faserkerne KE1, KE2 durch die Wärmebehandlung sowohl beim Schmelzverkleben der Faserstirnflächen als auch beim Verschmelzen der Glasmäntel miteinander ist also weitgehend vermieden.

Beim Verschmelzen der Glasmäntel MA1, MA2 gemäß Figur 8 wird der Glasmantel der jeweiligen Lichtleitfaser FE1, FE2 lediglich bis zu einer Materialschichttiefe von höchstens 50 $\mu$m, insbesondere zwischen 10 und 40 $\mu$m oberflächlich über Erweichungstemperatur gebracht und somit angeschmolzen. Die Totzeit zwischen je zwei aufeinanderfolgenden Hitzeimpulsen, insbesondere Glimmentladungsimpulsen wird zweckmäßigerweise derart groß gewählt, daß es zu keiner Akkumulation von Wärme im Inneren der jeweiligen Lichtleitfaser kommt. Vorzugsweise wird die Totzeit, das heißt die zeitliche Pause zwischen je zwei aufeinanderfolgenden Glimmentladungsimpulsen mindestens gleich 500 ms gewählt. Dadurch wird der jeweiligen Lichtleitfaser die Möglichkeit gegeben, sich wieder ausreichend abkühlen zu können, so daß eine unzulässig hohe Erweichung oder Ausschmelzung der Faserkerne weitgehend vermieden wird. Weiterhin wird die Entladestromstärke der Glimmentladungsimpulse insbesondere möglichst groß sowie deren Impulsdauer möglichst kurz gewählt. Für den jeweiligen Glimmentladungsimpuls wird zweckmäßigerweise eine Entladestromstärke von mindestens 60 mA verwendet. Für ihn wird zweckmäßigerweise eine Impulsdauer von höchstens 30 ms gewählt. Durch den gepulsten Betrieb mit hohen, kurzen Schweißstromimpulsen ist es insbesondere ermöglicht, einen so hohen Temperaturabfall innerhalb des Materialquerschnitts der jeweiligen Lichtleitfaser zu erzeugen, daß der jeweilige Faserkern selbst weitgehend im festen Materialzustand verbleibt und nicht angeschmolzen wird. Durch die lediglich oberflächliche Verschmelzung der Glasmäntel MA1, MA2 sind somit Kernverformungen, wie sie bei der Verschweißung von Lichtleitfasern mit exzentrischen Faserkernen aufgrund der Oberflächenspannung des Mantelmaterials und des infolgedessen resultierenden Selbstzentriereffekts auftreten können, weitgehend vermieden.

Die schematischen Längsschnittbilder der Figuren 18, 19 zeigen demgegenüber, was bei einer konventionellen Verschweißung von Lichtleitfasern mit exzentrisch positionierten Faserkernen passieren würde. Da die Lichtleitfasern bei konventionellen Schweißverfahren im Sekundenbereich kontinuierlich d.h. durchgehend wärmebehandelt werden, wird dabei die ganze Faser, d.h. der gesamte Faserquerschnitt aufgeschmolzen. Es kommt also zu einer vollständigen Durcherwärmung, d.h Aufschmelzung des Glasmaterials einschließlich der Faserkerne. Figur 18 zeigt, daß es zu einem Glasfluß MFK des Mantelmaterials aufgrund dessen Obefrflächenspannung und damit zu einem Selbstzentriereffekt käme. Dadurch würden die Faserkerne KE1, KE2 gegenphasig zueinander verformt bzw. verbogen werden. Die gegenphasige Verbindung ist in der Figur 19 mit GKV bezeichnet.

Im Gegensatz dazu verbleiben beim erfindungsgemäßen Fusionsschweißverfahren die Faserkerne im Inneren der Glasmäntel MA1, MA2 weitgehend im festen Zustand, d.h. deren Erweichung ist weitgehend vermieden. Denn die Glasmäntel MA1, MA2 werden stets lediglich oberflächlich angeschmolzen, das heißt nur in einer Oberflächenrandzone auf Erweichungstemperatur gebracht. Die aneinander gehefteten Faserkerne bleiben somit als starres Gebilde bzw. Gerüst im Inneren der Glasmäntel MA1, MA2 erhalten.

Infolge der Dotierung des jeweiligen Faserkerns KE1, KE2 mit GeO2 ist die Erweichungstemperatur des Kernmaterials im Vergleich zum Glasmantel Werkstoff um ca. 100°C abgesenkt. Während die Erweichungstemperatur des Faserkerns bei etwa 1630° C liegt, beträgt die Erweichungstemperatur des Glasmantels somit etwa 1730° C. Figur 10 zeigt das Temperaturprofil innerhalb des Faserquerschnitts einer Monomodefaser in Abhängigkeit vom Kernabstand KA nach Abgabe eines Glimmentladungsimpulses gemäß Figur 9. Um eine Kernerweichung zu vermeiden, wird ein Mindest-Temperaturabfall TAB größer als die Differenz zwischen der Erweichungstemperatur von etwa 1730° des Mantelglases MA1 und der Erweichungstemperatur von etwa 1630° C des Faserkerns KE1 erzeugt. Bei der Verschmelzung der Glasmäntel wird die Abfolge von Glimmentladungsimpulsen insbesondere derart eingestellt, daß ein steilerer Temperaturabfall in der jeweiligen Lichtleitfaser als bei der Verschmelzung der Stirnflächen der Lichtleitfasern erreicht werden kann. Um dies zu ermöglichen, wird gemäß Figur 9 die Impulsdauer PD des jeweiligen Glimmentladungsimpulses GP möglichst kurz sowie dessen Entladestromstärke SST möglichst groß gewählt.

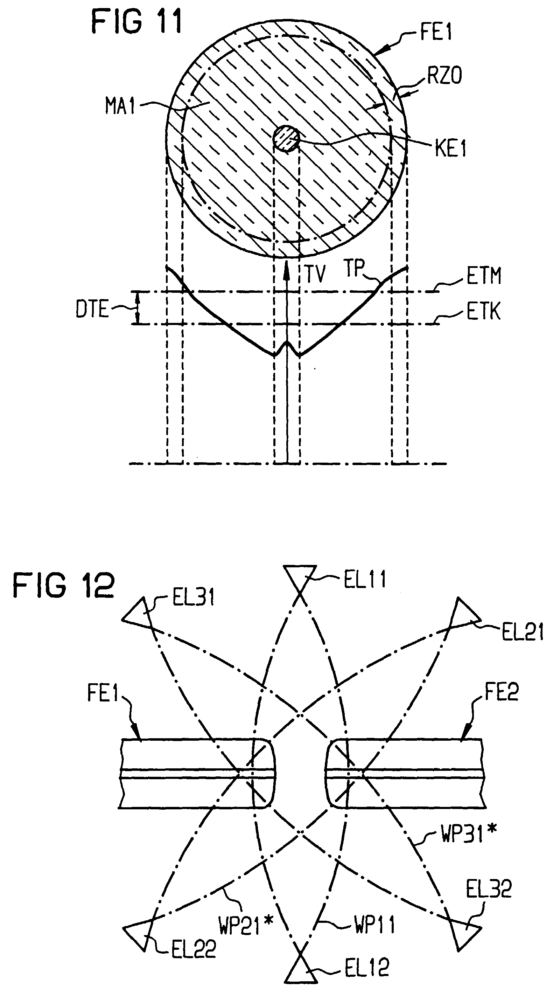

Figur 11 veranschaulicht das Temperaturgefälle TV beispielhaft innerhalb des Querschnitts der Lichtleitfaser FE1. Der Pulsbetrieb für die Glimmentladungen wird zweckmäßigerweise derart vorgenommen, daß der Temperaturabfall TAB zwischen der Außenoberfläche des Glasmantels MA1 und der Außenoberfläche des Faserkerns KE1 mehr als die Differenz DTE insbesondere von etwa 100° C, zwischen der Erweichungstemperatur ETM des Mantelglases MA1 und der Erweichungstemperatur ETK des Faserkerns KE1 beträgt. (DTE = ETM - ETK). Der Glasmantel der Lichtleitfaser FE1 von Figur 11 ist dabei lediglich innerhalb der Randzone RZO, das heißt oberflächlich, über die Erweichungstemperatur ETM des Mantelmaterials erwärmt und dadurch lediglich dort angeschmolzen. Weiter nach innen zum Faserkern hin nimmt die Temperatur der Lichtleitfaser FE1 stetig bis unter die Erweichungstemperatur ETK des Faserkerns ab. Der Faserkern selber weist eine etwas höhere Temperatur als das ihn direkt umgebende Glasmaterial des Glasmantels MA1 auf, da dieser mit Germaniumdioxyd dotiert ist. Bei einem solchen Temperaturgefälle TP innerhalb der jeweiligen Lichtleitfaser ist es somit in vorteilhafter Weise weitgehend vermieden, daß der Faserkern verformt wird, da er im festen Zustand unterhalb seiner Erweichungstemperatur ETK verbleibt.

Erst nach dem Verschweißen der Glasmäntel MA1, MA2 gemäß Figur 8 kann es gegebenenfalls zweckmäßig sein, in einem separaten, nachträglichen Verfahrensschritt die Faserenden FE1, FE2 zusätzlich im Bereich ihrer Verbindungsstelle zum Abbau von Materialspannungen im Faserinneren im wesentlichen vollständig durchzuerwärmen. Da die Glasmäntel der Lichtleitfasern FE1, FE2 bereits im Oberflächenbereich miteinander stoffschlüssig verbunden und an der Außenoberfläche geglättet sind, kann es dann nicht mehr zu einem Materialfluß kommen, der zu einer nachträglichen Verschiebung der Faserkerne führt. Für die vollständige Durcherwärmung der Lichtleitfasern ist insbesondere eine konventionelle Glimmentladung im Sekundenbereich bei gleichzeitig relativ niedrigen Schweißströmen, insbesondere von weniger als 20 mA, ausreichend. Dabei wird der gesamte Querschnitt der jeweiligen Lichtleitfaser mindestens auf Erweichungstemperatur gebracht. Insbesondere kann es dabei auch zweckmäßig sein, die räumliche Lage des Schweißverbindungsbereichs der Lichtleitfasern während dieser Durcherwärmung in Z-Längsrichtung zu verändern, um die Lichtleitfasern über ihre Verbindungsstelle hinweg möglichst auf etwa die gleiche Temperatur bringen zu können. Abrupte Temperaturgefälle in Längsrichtung über die Spleißverbindungsstelle hinweg betrachtet sind somit weitgehend vermieden. Auch kann ein Verdrehen der beiden miteinander verschweißten optischen Fasern um ihre Längsachse zweckmäßig sein, um den Bereich um ihre Spleißstelle SS möglichst gleichmäßig erwärmen zu können.

Zusammenfassend betrachtet läßt sich somit eine zeitlich getrennte Verschweißung der Faserkerne und der Glasmäntel der Lichtleitfasern erreichen. Dadurch kann die Kernversatzproblematik von der Zugfestigkeit-Problematik entkoppelt werden. Insbesondere ist folgende Abfolge von Verfahrensschritten zweckmäßig:

Zunächst werden die Faserenden bezüglich ihrer Faerkerne entlang einer gedachten Verbindungsgeraden fluchtend aufeinander ausgerichtet. Dann werden die Faserenden im Bereich ihrer Stirnflächen mittels mindestens eines einzelnen Hitzeimpulses, insbesondere eines Glimmentladungsimpulses, jeweils lediglich im Oberflächenbereich angeschmolzen. Bevorzugt kann zur besseren Dosierung der abgegebenen Hitzemenge eine Abfolge mehrerer, d.h. einer Vielzahl von Einzelimpulsen verwendet werden. Die beiden derart erweichten Faserenden werden daraufhin mit ihren Stirnflächen derart in Kontakt gebracht und miteinander verklebt, daß ihre Faserkerne sich im wesentlichen entlang der gedachten Verbindungsgeraden erstrecken. Es wird hierbei insbesondere lediglich Wert darauf gelegt, daß die Faserkerne fluchtend aufeinander ausgerichtet sind und in dieser Lage miteinander schweißverklebt werden, während auf die Zugfestigkeit dieser Kernverklebung zunächst noch keine Rücksicht genommen wird. Zur Erhöhung der Zugfestigkeit dieser Schweißverbindung wird erst in einem nachfolgenden, separaten Schweißvorgang mindestens ein Hitzeimpuls auf die aneinandergeklebten Faserenden derart abgegeben, daß deren Glasmäntel lediglich im Oberflächenbereich angeschmolzen und dadurch miteinander verschmolzen werden, während die zuvor aneinandergeklebten Faserkerne im Inneren der Lichtleitfasern unangeschmolzen verbleiben und sich im wesentlichen weiterhin entlang der gedachten Verbindungsgeraden erstrecken. Auch hierzu kann bevorzugt eine Hitzeimpulssequenz zur besseren Dosierung der Hitzemenge abgegeben werden.

Gegebenenfalls kann dabei vor dem Aneinanderheften der Stirnflächen die Stirnfläche des jeweiligen Lichtleitfaserendes mit Hilfe mindestens eines Hitzeimpulses derart vorverformt werden, daß eine annäherungsweise plane Endfläche erzeugt wird, bezüglich der die Zentralachse dieses Lichtleitfaserendes im wesentlichen eine Flächennormale bezüglich der vorverformten Stirnfläche bildet.

Während der Wärmebehandlung der jeweiligen Lichtleitfaser wie zum Beispiel FE1 von Figur 1 mit Hilfe von ein oder mehreren Hitzeimpulsen kann es zweckmäßig sein, eine etwaige Verformung des Faserkerns wie zum Beispiel KE1 der Lichtleitfaser wie zum Beispiel FE1 zu überwachen. Dazu kann beispielsweise Meßlicht durch die Lichtleitfaser FE1 hindurchgeführt werden und eine etwaige Veränderung mindestens einer Übertagungskenngröße dieses Meßlichts gemessen und zur Auswertung bereitgestellt werden. In der Figur 1 wird beispielsweise bei der getrennten Verschmelzung der Glasmäntel der Lichtleitfasern FE1, FE2 das Meßlicht ML über die Schweißverbindungsstelle geschickt. Bei einer etwaigen Kernverschiebung oder Kernverformung würde sich dann die Transmission dieses Meßlichts ML verändern. Anteile des über die Spleißverbindungsstelle geschickten Meßlichts können empfangsseitig aus dem Lichtwellenleiter LW2 mit Hilfe des Biegekopplers BK2 ausgekoppelt und mit Hilfe des lichtempfindlichen Elements LE aufgenommen werden. Das lichtempfindliche Element LE erzeugt aus dem Empfangsstrahlungsfeld ESF der ausgekoppelten Meßlichtanteile elektrische Meßsignale, die es über die Leitung LLE an die Rechen- und Auswerteeinrichtung COM überträgt. Der Empfangspegel IP dieses aufgenommenen Meßlichts während der Wärmebehandlung der Lichtleitfasern FE1, FE2 nach dem erfindungsgemäßen Prinzip ist in der Figur 1 beispielhaft im Display DSP1 über der Zeit t aufgetragen. Dabei ist ersichtlich, daß der Empfangspegel IP für die Lichtleistung im wesentlichen konstant bleibt, das heißt eine unzulässig hohe Spleißdämpfung ist im wesentlichen vermieden. Eine sich während der Wärmebehandlung etwaig ergebende Verschlechterung der Übertragungsdämpfung kann selbstverständlich auch mit sonstigen gängigen Dämpfungsmeßverfahren, wie zum Beispiel dem sogenannten LID („Light Injection and Detection") oder nach dem sogenannten OTDR-Meßverfahren bestimmt werden.

Gegebenenfalls ist es auch möglich, eine etwaige Verschiebung oder Verformung des Faserkerns während der Wärmebehandlung der jeweiligen Lichtleitfaser durch geeignete optische Abbildungen zu überwachen oder zu messen. Dies sind insbesondere alle möglichen Verfahren zur Sichtbarmachung der Faserkerne. Insbesondere kann es zweckmäßig sein, den Leistungspegel des über die Spleißstelle gekoppelten Lichts zur Steuerung bzw. Regelung der Impulsdauer, Totzeit und/oder Entladestromstärke der Glimmentladungsimpulse heranzuziehen.

Gegebenenfalls kann es auch zweckmäßig sein, den jeweilig an der Lichtleitfaser wirksam werdenden Hitzeimpuls mit Hilfe eines Lasers oder eines hochfrequenten Plasmas als Wärmequelle zu erzeugen. Dadurch ist es insbesondere ermöglicht, den jeweiligen Hitzeimpuis fokussiert für die jeweilige Lichtleitfaser abzugeben.

Gegebenenfalls kann es auch vorteilhaft sein, Glimmentladungsimpulse zwischen mehreren Elektrodenpaaren zur gezielten Wärmebehandlung der Lichtleitfasern zeitgleich oder nach vorgegebener Reihenfolge zu zünden. Figur 12 zeigt eine solche Anordnung, die bespielhaft drei Paare von Elektroden einsetzt und zwar im einzelnen EL11/EL12, EL21/EL22 sowie EL31/EL32. Bei diesen Elektrodenpaaren stehen sich jeweils zwei Elektroden auf gegenüberliegenden Längsseiten der Lichtleitfasern FE1, FE2 gegenüber. Das Elektrodenpaar EL11, EL12 erzeugt Glimmentladungsimpulse im Bereich WP11, der sich im wesentlichen orthogonal, das heißt senkrecht zur geradlinigen Längserstreckung der Lichtleitfasern FE1, FE2 erstreckt. Gegenüber diesem Lichbogen- Ausbreitungsbereich WP11 ist der Lichtbogenbereich WP21* des Elektrodenpaares EL21/EL22 um einen vorgebbaren Winkel gekippt, so daß er sich schräg zu den Zentralachsen der Lichtleitfasern FE1, FE2 erstreckt. Auf diese Weise wird erreicht, daß vom jeweiligen Lichtbogen zwischen den beiden Elektroden EL21/EL22 ein größerer Längsbereich der Lichtleitfasern FE1, FE2 entlang deren Längserstreckung erfaßt wird. Das Elektrodenpaar EL31/EL32 ist schließlich bezüglich der orthogonalen Anordnung des Elektrodenpaares EL11/EL12 in entgegengesetzte Richtung wie das Elektrodenpaar EL21/EL22 um einen vorgebbaren Winkel gekippt. Insbesondere weisen die Lichtbogen - Ausbreitungsbereiche WP21*, WP31* der zusätzlich zündbaren Glimmentladungen gegenüber den Faserlängsachsen der Lichtleitfasern FE1, FE2 einen Winkel zwischen 20 und 50°, insbesondere zwischen 30 und 45° auf. Mit Hilfe der zusätzlichen, schräggestellten Lichtbogenbereiche WP21*, WP31* wird es in vorteilhafter Weise möglich, die Lichtleitfasern FE1, FE2 im Spleißbereich über eine größere Längsausdehnung hinweg gleichmäßig mit Wärme zu behandeln. Dadurch sind abrupte Temperaturübergänge in Faserlängsrichtung betrachtet weitgehend vermieden, so daß Materialbrüche im Bereich der Spleißverbindungsstelle weitgehend vermieden sind. Eine solche modifizierte Schweißanordnung eignet sich insbesondere zum nachträglichen Durcherwärmen der bereits miteinander fusionsverschweißten Fasern.

Das erfindungsgemäße Prinzip zur Verschweißung zweier einander zugeordneter Lichtleitfasern kann insbesondere auch auf die Mehrfaserspleißtechnik übertragen werden. So können beispielsweise auch die freigelegten, entcoateten Lichtleitfasern von zwei Lichtwellenleiter- Bändchen miteinander verbunden werden.

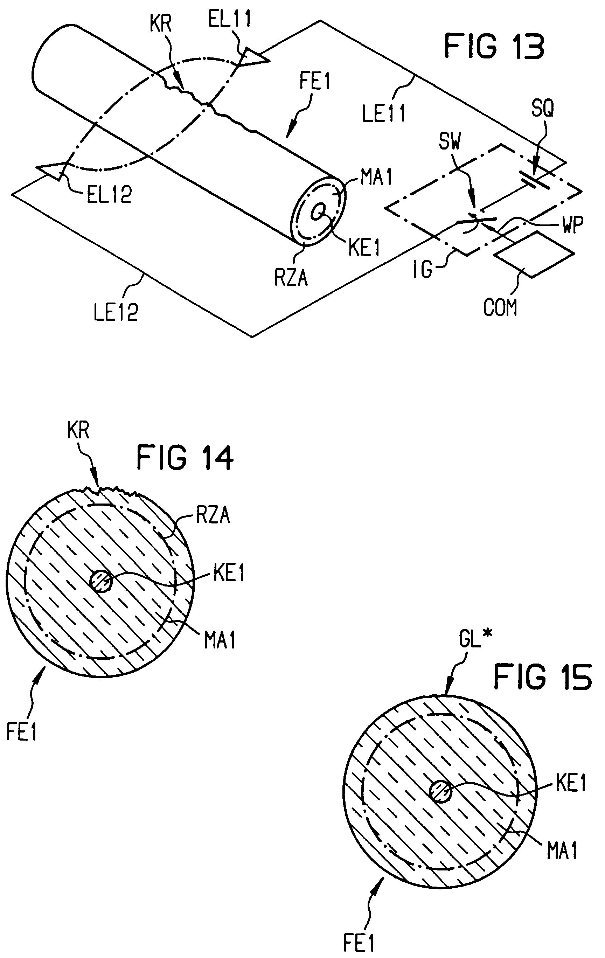

Zusätzlich und/oder unabhängig zur erfindungsgemäßen Verschweißung je zweier Lichtleitfasern miteinander ist es mit der erfindungsgemäßen Schweißeinrichtung SE von Figur 1 ggf. auch möglich, etwaige Kratzer oder Einkerbungen auf der Außenoberfläche einer Lichtleitfaser durch Glättung mittels ein oder mehrerer erfindungsgemäßer Hitzeimpulse zu heilen. Dies veranschaulicht beispielhaft Figur 13, wo zum Beispiel die Lichtleitfaser FE1 perspektivisch eingezeichnet ist. Sie weist im Oberflächenbereich ihres Mantelglases MA1 Kratzer bzw. Einkerbungen KR auf. Mit Hilfe des Impulsgenerators IG werden sehr kurze Glimmentladungsimpulse hoher Schweißstromstärke auf die Außenoberfläche des Glasmantels MA1 derart abgegeben, daß lediglich eine oberflächliche, äußere Randzone RZA dieses Glasmantels MA1 angeschmolzen wird. Allgemein ausgedrückt wird von der Faseraußenoberfläche ins Faserinnere hinein ein so großer Temperaturabfall bewirkt, daß der Faserkern im Glasmaterialinneren weitgehend unerweicht verbleibt und seine ursprüngliche Form und Lage im wesentlichen erhalten bleibt. Während der Wärmebehandlung mittels dieser Hitzeimpulse verbleibt also der Faserkern KE1 im Inneren des Glasmantels MA1 weitgehend unverformt, d.h.

allgemein ausgedrückt weitgehend unbeeinflußt.

Figur 14 zeigt in schematischer sowie vergrößerter Querschnittsdarstellung die Lichtleitfaser FE1 von Figur 13 vor ihrer Wärmebehandlung. Sie weist an der Außenoberfläche ihres Glasmantels MA1 unerwünschte Kratzer bzw. Einkerbungen KR auf. Figur 15 zeigt in schematischer sowie vergrößerter Querschnittsdarstellung die Lichtleitfaser FE1 nach der Wärmebehandlung mit Hilfe der erfindungsgemäß abgegebenen Hitzeimpulse. Durch die lediglich oberflächliche Anschmelzung des Glasmantelmaterials MA1 wird in vorteilhafter Weise eine Glättung GL* des Glasmaterials erreicht, wobei der Faserkern KE1 weitgehend im festen Zustand verbleibt. Unerwünschte Biegungen oder Verformungen des Faserkerns sind somit weitgehend vermieden. Durch die Glättung GL bzw. Homogenisierung der Außenoberfläche des Glasmantels MA1 wird insbesondere die Wahrscheinlichkeit eines Faserbruchs deutlich reduziert, da die Lichtleitfaser FE1 nach der Wärmebehandlung über ihre Länge gesehen wieder einen im wesentlichen durchgängig kreiszylinderförmigen, d.h. homogenen Glasmantel aufweist.

## Patentansprüche

1. Verfahren zur Wärmebehandlung mindestens einer Lichtleitfaser (FE1),
   **dadurch gekennzeichnet,**
   daß auf die jeweilige Lichtleitfaser (FE1) mindestens ein Hitzeimpuls (vergleiche zum Beispiel WP11 in Figur 8) derart abgegeben wird, daß die Lichtleitfaser (FE1) lediglich im Oberflächenbereich (OZ) ihres Glasmantels (MA1) und/oder an ihrer Stirnfläche (vergleiche zum Beispiel in Figur 6 AF1) angeschmolzen wird.

2. Verfahren nach Anspruch 1,
   **dadurch gekennzeichnet,**
   daß die jeweilige Lichtleitfaser (FE1) lediglich bis zu einer Materialschichttiefe von höchstens 50 $\mu$m oberflächlich angeschmolzen wird.

3. Verfahren nach einem der vorhergehenden Ansprüche,
   **dadurch gekennzeichnet,**
   daß Impulsdauer und/oder Wärmeenergie des jeweiligen Hitzeimpulses (wie zum Beispiel WP11 in Figur 6) derart gewählt wird, daß ein möglichst großer Temperaturabfall (TP) von der Außenoberfläche zum Zentrum der jeweiligen Lichtleitfaser (FE1) erreicht wird.

4. Verfahren nach Anspruch 3,
   **dadurch gekennzeichnet,**
   daß ein Temperaturabfall (TP) größer als die Differenz (DTE) zwischen der Erweichungstemperatur (ETM) des Mantelglases (MA1) und der Erweichungstemperatur (ETK) des Faserkerns (KE1) der jeweiligen Lichtleitfaser (FE1) erzeugt wird.

5. Verfahren nach einem der Ansprüche 3 oder 4, **dadurch gekennzeichnet,** daß ein Temperaturabfall (TP) von mindestens 100 Grad Celsius erzeugt wird.

6. Verfahren nach einem der vorhergehenden Ansprüche, **dadurch gekennzeichnet,** daß die Totzeit (wie zum Beispiel tE2-tE1 in Figur 1) zwischen zwei aufeinanderfolgenden Hitzeimpulsen (wie zum Beispiel P1, P2) so groß gewählt wird, daß es zu keiner Akkumulation von Wärme im Inneren der jeweiligen Lichtleitfaser (FE1) kommt.

7. Verfahren nach einem der vorhergehenden Ansprüche, **dadurch gekennzeichnet,** daß der jeweilige Hitzeimpuls (wie zum Beispiel WP11 in Figur 4) mittels einer gepulsten Glimmentladung erzeugt wird.

8. Verfahren nach Anspruch 7, **dadurch gekennzeichnet,** daß für den jeweiligen Glimmentladungsimpuls eine Lichtbogen-Entladestromstärke (SST) von mindestens 60 mA verwendet wird.

9. Verfahren nach einem der Ansprüche 7 oder 8, **dadurch gekennzeichnet,** daß die Totzeit (wie zum Beispiel TE2 -TA1 in Figur 1) zwischen je zwei aufeinanderfolgenden Glimmentladungsimpulsen (wie zum Beispiel P1, P2) mindestens gleich 500 ms gewählt wird.

10. Verfahren nach einem der Ansprüche 7 mit 9, **dadurch gekennzeichnet,** daß für den jeweiligen Glimmentladungsimpuls (wie zum Beispiel GEP in Figur 9)eine Impulsdauer (PD) von höchstens 30 ms gewählt wird.

11. Verfahren nach einem der Ansprüche 1 mit 6, **dadurch gekennzeichnet,** daß der jeweilige Hitzeimpuls mit Hilfe eines Lasers erzeugt wird.

12. Verfahren nach einem der Ansprüche 1 mit 6, **dadurch gekennzeichnet,** daß der jeweilige Hitzeimpuls mit Hilfe eines Hochfrequenzplasmas erzeugt wird.

13. Verfahren nach einem der vorhergehenden Ansprüche, **dadurch gekennzeichnet,** daß zum Anschmelzen der Faserstirnfläche (AF1) der jeweiligen Lichtleitfaser (FE1) mindestens 3 Hitzeimpulse, vorzugsweise zwischen 3 und 20 Hitzeimpulse, abgegeben werden.

14. Verfahren nach einem der vorhergehenden Ansprüche, **dadurch gekennzeichnet,** daß zum Anschmelzen der Außenoberfläche des Glasmantels (MA1) der jeweiligen Lichtleitfaser (FE1) mindestens 20 Hitzeimpulse, vorzugsweise zwischen 20 und 500 Hitzeimpulse, abgegeben werden.

15. Verfahren nach einem der vorhergehenden Ansprüche, **dadurch gekennzeichnet,** daß die Wärmeleistung jedes Hitzeimpulses (GEP) derart gewählt wird, daß der Glasmantel (MA1) der jeweiligen Lichtleitfaser (FE1) an seiner Außenoberfläche mindestens auf seine Erweichungstemperatur (ETM) erwärmt wird.

16. Verfahren nach einem der vorhergehenden Ansprüche, **dadurch gekennzeichnet,** daß während der Wärmebehandlung der jeweiligen Lichtleitfaser (FE1) eine etwaige Verformung deren Faserkerns (KE1) überwacht wird.

17. Verfahren nach einem der vorhergehenden Ansprüche, **dadurch gekennzeichnet,** daß während der Wärmebehandlung der jeweiligen Lichtleitfaser (FE1) Meßlicht (ML) durch die Lichtleitfaser (FE1) hindurchgeführt wird, und daß eine etwaige Veränderung mindestens einer Übertragungskenngröße dieses Meßlichts (ML) gemessen und zur Auswertung bereitgestellt wird.

18. Verfahren nach einem der vorhergehenden Ansprüche, **dadurch gekennzeichnet,** daß Hitzeimpulse (wie zum Beispiel WP11, WP21*, WP31* in Figur 12) aus mehreren Richtungen zeitgleich oder nach einer vorgegebenen Reihenfolge auf die jeweilige Lichtleitfaser (FE1) abgegeben werden.

19. Verfahren nach einem der vorhergehenden Ansprüche, **dadurch gekennzeichnet,** daß der jeweilige Hitzeimpuls (WP11) fokussiert für die jeweilige Lichtleitfaser (FE1) abgegeben wird.

20. Verfahren nach einem der vorhergehenden Ansprüche, **dadurch gekennzeichnet,** daß ein oder mehrere Hitzeimpulse (wie zum Beispiel WP11 in Figur 8) zur Glättung der Außenoberfläche des Glasmantels (MA1) der jeweiligen Lichtleitfaser (FE1) auf diese abgegeben werden.

21. Verfahren nach einem der vorhergehenden Ansprüche,
**dadurch gekennzeichnet,**
daß ein oder mehrere Hitzeimpulse ( wie zum Beispiel WP11 in Figur 4) zur Vorverformung der Stirnfläche (SF1) der jeweiligen Lichtleitfaser (FE1) abgegeben werden.

22. Verfahren nach einem der vorhergehenden Ansprüche,
**dadurch gekennzeichnet,**
daß ein oder mehrere Hitzeimpulse (wie zum Beispiel in Figur 4, in Figur 6, in Figur 8) zur Herstellung einer stirnseitigen Schweißverbindung zwischen mindestens zwei einander zugeordneten Lichtleitfaserenden (FE1, FE2) auf diese abgegeben werden.

23. Verfahren nach Anspruch 22,
**dadurch gekennzeichnet,**
daß vor dem Verschweißen zunächst die Lichtleitfaserenden (FE1, FE2) in definiertem Längsabstand voneinander positioniert sowie bezüglich ihrer Faserkerne (KE1, KE2) entlang einer gedachten Verbindungsgeraden (VL) im wesentlichen fluchtend aufeinander ausgerichtet werden.

24. Verfahren nach einem der Ansprüche 22 oder 23,
**dadurch gekennzeichnet,**
daß vor dem Verschweißen die Stirnfläche (SF1, SF2) des jeweiligen Lichtleitfaserendes (FE1, FE2) mit Hilfe mindestens eines Hitzeimpulses (wie zum Beispiel WP11 in Figur 4) derart vorverformt wird, daß eine annäherungsweise plane Endfläche erzeugt wird, bezüglich der die Zentralachse (FA1, FA2) dieses Lichtleitfaserendes (FE1, FE2) im wesentlichen eine Flächennormale bildet.

25. Verfahren nach einem der Ansprüche 22 mit 24,
**dadurch gekennzeichnet,**
daß die Stirnflächen (AF1, AF2) der beiden Faserenden (FE1, FE2) mittels mindestens eines Hitzeimpulses (wie z.B. in Figur 6) jeweils lediglich im Oberflächenbereich (RZ1, RZ2) angeschmolzen werden, und daß die beiden, derart erweichten Stirnflächen (AF1, AF2) so in Kontakt gebracht und miteinander verklebt werden, daß die Faserkerne (KE1, KE2) der Lichtleitfaser (FE1, FE2) eine vorgebbare räumliche Lage zueinander einnehmen.

26. Verfahren nach Anspruch 25,
**dadurch gekennzeichnet,**
daß die erweichten Stirnflächen (AF1, AF2) so in Kontakt gebracht und miteinander verklebt werden, daß die Faserkerne (KE1, KE2) zueinander fluchtend ausgerichtet sind.

27. Verfahren nach einem der Ansprüche 25 oder 26,
**dadurch gekennzeichnet,**
daß die Faserenden (FE1, FE2) beim Zusammenkleben ihrer Stirnfläche (AF1, AF2) auf einer Längsstrecke von höchstens 50 µm, insbesondere zwischen 10 und 40 µm, ineinandergefahren werden.

28. Verfahren nach einem der Ansprüche 25 mit 27,
**dadurch gekennzeichnet,**
daß zur Erhöhung der Zugfestigkeit der Schweißverbindung auf die aneinandergeklebten Lichtleitfaserenden (FE1, FE2) mindestens ein Hitzeimpuis (wie zum Beispiel in Figur 8) derart abgegeben wird, daß deren Glasmäntel (FA1, FA2) im Oberflächenbereich angeschmolzen und dadurch miteinander verschmolzen werden, während die Faserkerne (KE1, KE2) im Inneren der zuvor aneinanderklebten Lichtleitfasern (FE1, FE2) weitgehend unverformt verbleiben.

29. Verfahren nach Anspruch 28,
**dadurch gekennzeichnet,**
daß die aneinandergeklebten Lichtleitfaserenden (FE1, FE2) für das Verschmelzen ihrer Glasmäntell (MA1, MA2) ortsfest positioniert werden.

30. Verfahren nach einem der Ansprüche,
**dadurch gekennzeichnet,**
daß nach dem Verschweißen der Glasmäntel (MA1, MA2) die Faserenden (FE1,FE2) im Bereich ihrer Verbindungsstelle (SS) zum Abbau von Materialspannungen im Faserinneren im wesentlichen vollständig ducherwärmt werden.

31. Vorrichtung zur Wärmebehandlung mindestens einer Lichtleitfaser (FE1) unter Verwendung einer Wärmequelle (EL11, EL12), insbesondere nach einem der vorhergehenden Ansprüche,
**dadurch gekennzeichnet,**
daß die Wärmequelle (EL11, EL12) derart ausgebildet ist, daß mit Hilfe mindestens eines Hitzeimpulses (wie zum Beispiel in Figur 7) lediglich der Glasmantel (MA1) und/oder die Stirnfläche (wie zum Beispiel AF1 in Figur 4) der jeweiligen Lichtleitfaser (FE1) anschmelzbar sind/ist.

32. Vorrichtung nach Anspruch 31,
**dadurch gekennzeichnet,**
daß die Wärmequelle (EL11, EL12) Bestandteil eines Lichtwellenleiter-Spleißgerätes ist.

33. Vorrichtung nach einem er Ansprüche 31 oder 32,
**dadurch gekennzeichnet,**
daß die Wärmequelle (EL11, EL12) einen Impulsgenerator (wie zum Beispiel SW, COM in Figur 3) zur Erzeugung von Hitzeimpulsen (wie zum Bei-spiel WP11) aufweist.

FIG 1

EP 0 831 347 A2

FIG 2

**FIG 3**

**FIG 4**

**FIG 5**

FIG 6

FIG 7

## FIG 8

MA1 KE1 GL OZ KE2 MA2
EL11 LE11
SQ
SW WP
COM
VL
SS
IG
FE1 WP11 EL12 FE2
LE12

## FIG 9

SST [mA]

GEP

PD

t [msec]

## FIG 10

KE1

MA1

FE1

T[°C]

TAB 1730
1630

KA

4     62,5 [μm]

FIG 11

FIG 12

FIG 13

FIG 14

FIG 15

## FIG 16

FE1  FE2
KE1  KE2
MA1  MFS  MA2
SP

## FIG 17

KE1  KE2
MA1  VE1  VE2  MA2

## FIG 18

FE1  FE2
KE1  KE2
MFK
MA1  MA2

## FIG 19

FE1  FE2
KE1  KE2
GKV
MA1  MA2